(19) Europäisches Patentamt / European Patent Office / Office européen des brevets

(11) **EP 3 439 202 B1**

(12) **EUROPEAN PATENT SPECIFICATION**

(45) Date of publication and mention of the grant of the patent:
**04.05.2022 Bulletin 2022/18**

(21) Application number: **17774420.8**

(22) Date of filing: **17.03.2017**

(51) International Patent Classification (IPC):
**H04B 10/079** $^{(2013.01)}$     **H04L 29/14** $^{(2006.01)}$
**H04L 12/26** $^{(2006.01)}$

(52) Cooperative Patent Classification (CPC):
**H04B 10/079; H04L 43/0864; H04L 69/40;**
**H04L 41/0668**

(86) International application number:
**PCT/JP2017/010831**

(87) International publication number:
**WO 2017/169876 (05.10.2017 Gazette 2017/40)**

(54) **MANAGEMENT DEVICE, AND IDENTIFICATION METHOD AND STORAGE MEDIUM HAVING PROGRAM THEREOF STORED THEREIN**

VERWALTUNGSVORRICHTUNG UND IDENTIFIZIERUNGSVERFAHREN SOWIE SPEICHERMEDIUM MIT DARAUF GESPEICHERTEM PROGRAMM DAFÜR

DISPOSITIF DE GESTION ET PROCÉDÉ D'IDENTIFICATION ET SUPPORT DE STOCKAGE DANS LEQUEL EST STOCKÉ SON PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2016 JP 2016063618**

(43) Date of publication of application:
**06.02.2019 Bulletin 2019/06**

(73) Proprietor: **NEC Corporation**
**Tokyo 108-8001 (JP)**

(72) Inventor: **NAKANO Takehiro**
**Tokyo 108-8001 (JP)**

(74) Representative: **Betten & Resch**
**Patent- und Rechtsanwälte PartGmbB**
**Maximiliansplatz 14**
**80333 München (DE)**

(56) References cited:
**WO-A1-2015/103538     JP-A- H0 832 533**
**JP-A- 2000 032 411     JP-A- 2016 005 128**
**US-A1- 2013 243 421**

• **FROST S BRYANT CISCO SYSTEMS D: "Packet Loss and Delay Measurement for MPLS Networks; draft-ietf-mpls-loss-delay-04.txt", PACKET LOSS AND DELAY MEASUREMENT FOR MPLS NETWORKS; DRAFT-IETF-MPLS-LOSS-DELAY-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 4, 19 July 2011 (2011-07-19), pages 1-52, XP015077441, [retrieved on 2011-07-19]**

**Description**

[Technical Field]

The disclosed subject matter relates to a management device and the like of an optical transmission system having a transmission path in which a transmission path length between optical transmitting/receiving devices is changed by route switching.

[Background Art]

A physical transmission route of an optical main signal changes in some cases due to an enhanced function of an optical transmission system, such as route redundancy of a transmission path resulting from a route diversity configuration or a reconfigurable optical add/drop multiplex (ROADM) function. Under the above circumstances, it is important to obtain information from an optical transmitting/receiving device of the optical transmission system or equipment on a transmission path, and find a state of the optical transmission system.

On the other hand, finding a state of an optical transmission system is difficult when it is impossible to communicate with equipment in a transmission path due to a system design in a repeater or a branching unit of a submarine cable system, or when it is impossible to obtain configuration information of a transmission path due to breakdown of a communication circuit of the equipment in the transmission path.

As a method of selecting from a plurality of transmission paths, PTL 1 describes calculating a delay time from a test packet which has made one round trip between a mobile station and a base station, and selecting a transmission path having a least delay time.

PTL 2 describes measuring a transmission delay amount in a transmission path, estimating a transmission loss, and then using the transmission loss for power adjustment of optical transmitting. Moreover, PTL 3 describes a method of measuring a round-trip delay time. WO2015103538 A1 provides embodiments where periodic round-trip probes are executed in a network, whereby a packet is transmitted along a particular communication path from a source to a destination and back to the source. Statistical information relating to the round-trip probes is gathered, and a transmission delay of the round-trip probes is calculated based on the gathered statistical information. Also, an end-to-end transmission delay along an arbitrary communication path in the network is estimated based on the calculated transmission delay of the round-trip probes.

[Citation List]

[Patent Literature]

[PTL 1] Japanese Unexamined Patent Application Publication No. 2008-072181
[PTL 2] Japanese Unexamined Patent Application Publication No. 2005-341022
[PTL 3] Japanese Unexamined Patent Application Publication No. 2005-269034

[Summary of Invention]

[Technical Problem]

One method of finding a state of an optical transmission system is to determine a route through which a received light passes based on a shape of a light spectrum of the received light. However, the method utilizing the light spectrum of the received light may not identify a transmission route of the optical transmission system because a shape of a light spectrum in a route switching unit of the transmission path does not change.

An object of the disclosed subject matter is to provide a management device and the like being capable of identifying a transmission route of a transmission path, even when communication with equipment disposed on the transmission path of an optical transmission system is not possible.

[Solution to Problem]

The invention is set out in the appended set of claims 1 to 11. In one accept of the disclosed subject matter, a management device managements an optical transmission system. The optical transmission system is provided with a transmission path in which each transmission route between first and second optical transmitting/receiving devices has a different transmission path length. The management device includes collecting means for registering route delay information indicating a transmission delay time for each of the transmission routes, and collecting a measurement delay time being a transmission delay time of the transmission path being measured by the first optical transmitting/receiving device. The management device includes identifying means for identifying the transmission route corresponding to the measurement delay time, based on the route delay information and the measurement delay time.

In one accept of the disclosed subject matter, an identification method identifies a transmission route in an optical transmission system. The optical transmission system is provided with a transmission path in which each transmission route between first and second optical transmitting/receiving devices has a different transmission path length. The identification method includes registering route delay information indicating a transmission delay time for each of the transmission routes, collecting a measurement delay time being a transmission delay time of the transmission path being measured by the first optical transmitting/receiving device, and identifying a transmission route associated with the measurement delay time, based on the route delay information and the measurement delay time.

In one accept of the disclosed subject matter, a recording medium stores a program that identifies a transmission route in an optical transmission system provided with a transmission path in which each transmission route between first and second optical transmitting/receiving devices has a different transmission path length. The program causes a computer to register route delay information indicating a transmission delay time for each of the transmission routes, collect a measurement delay time being a transmission delay time of the transmission path being measured by the first optical transmitting/receiving device, and identify a transmission route associated with the measurement delay time, based on the route delay information and the measurement.

[Advantageous Effects of Invention]

According to the disclosed subject matter, a transmission route of a transmission path may be identified, even when communication with equipment disposed on the transmission path of an optical transmission system is not possible.

[Brief Description of Drawings]

Fig. 1 is a block diagram illustrating configurations of a management device and an optical transmission system according to a first example embodiment.
Fig. 2 is a table diagram illustrating a route configuration between optical transmitting/receiving devices of the optical transmission system.
Fig. 3 is a block diagram illustrating one example of a configuration of an optical transponder of the optical transmitting/receiving device.
Fig. 4 is a table diagram illustrating a relation between a transmission delay time acquired by the optical transponder and a route.
Fig. 5 is a flowchart illustrating an operation of the management device.
Fig. 6 is a block diagram illustrating configurations of a management device and an optical transmission system according to a second example embodiment.
Fig. 7 is a block diagram illustrating a configuration of an optical transponder according to the second example embodiment.
Fig. 8 is a block diagram illustrating configurations of a management device and an optical transmission system according to a third example embodiment.
Fig. 9 is a block diagram illustrating a configuration of an optical transmission system according to a modification example of the third example embodiment.
Fig. 10 is a block diagram illustrating configurations of a management device and an optical transmission system according to a fourth example embodiment.
Fig. 11 is a table diagram illustrating individual routes constituting a transmission path and transmission delay times of the transmission path according to the fourth example embodiment.
Fig. 12 is a table diagram illustrating route delay information in the transmission path according to the fourth example embodiment.
Fig. 13 is a block diagram illustrating a configuration of an optical transmission system according to a fifth example embodiment.
Fig. 14 is a table diagram illustrating route delay information of a transmission path in the optical transmission system according to the fifth example embodiment.
Fig. 15 is a block diagram illustrating configurations of a management device and an optical transmission system according to a sixth example embodiment.

Fig. 16 is a table diagram illustrating a route configuration between optical transmitting/receiving devices according to the sixth example embodiment.

Fig. 17 is a block diagram illustrating a configuration of an optical transponder of the optical transmitting/receiving device according to the sixth example embodiment.

Fig. 18 is a table diagram illustrating a relation between a transmission delay time measured by the optical transponder and a route according to the sixth example embodiment.

Fig. 19 is a block diagram illustrating a hardware configuration in which the management devices in the first to sixth example embodiments are realized by a computer device.

[Example Embodiment]

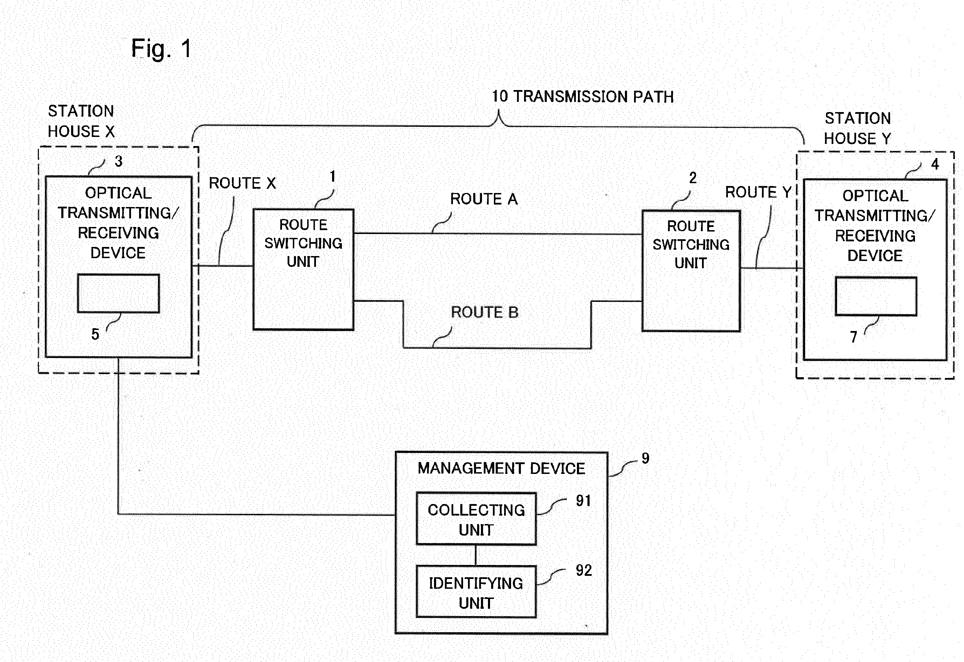

An optical transmission system and a management device according to a first example embodiment of the disclosed subject matter are described with reference to the drawings. Fig. 1 is a block diagram illustrating configurations of the management device and the optical transmission system according to the first example embodiment. First, the configuration of the optical transmission system managed by the management device is described.

As illustrated in Fig. 1, the optical transmission system according to the first example embodiment includes an optical transmitting/receiving device 3 disposed in a station house X, an optical transmitting/receiving device 4 disposed in a station house Y, and a transmission path 10 connecting the optical transmitting/receiving device 3 and the optical transmitting/receiving device 4. The transmission path 10 is mainly configured by an optical fiber, but may include equipment such as a repeater in addition to the optical fiber.

A route switching unit 1 and a route switching unit 2 are disposed on the transmission path 10, and have a function of switching a route for transmission of an optical signal to one of routes A and B. As illustrated in Fig. 1, the route A and the route B having different route lengths are formed by the route switching unit 1 and the route switching unit 2 as route redundant sections in the transmission path 10. The route switching units 1 and 2 are switched by an instruction from a management device 9, or autonomously switched by the route switching units 1 and 2 detecting a failure in a route. It is assumed that, in the transmission path 10, a part between the optical transmitting/receiving device 3 and the route switching unit 1 is a route X, and a part between the optical transmitting/receiving device 4 and the route switching unit 2 is a route Y.

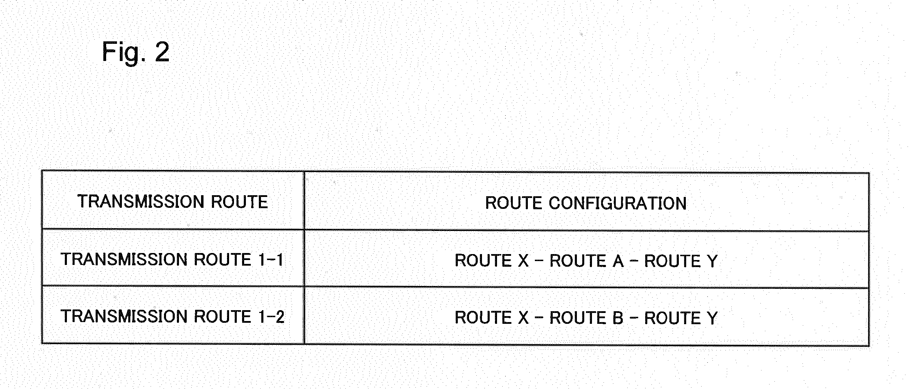

Fig. 2 is a table diagram illustrating a route configuration between the optical transmitting/receiving device 3 and the optical transmitting/receiving device 4. As illustrated in Fig. 2, routes from the optical transmitting/receiving device 3 to the optical transmitting/receiving device 4 are a transmission route 1-1 including the route X, the route A, and the route Y, and a transmission route 1-2 including the route X, the route B, and the route Y.

Next, configurations of the optical transmitting/receiving devices 3 and 4 of the optical transmission system are described. The optical transmitting/receiving devices 3 and 4 include optical transponders 5 and 7, respectively. In the first example embodiment, the optical transponder 5 of the optical transmitting/receiving device 3 has a function of transmitting an optical signal to the optical transmitting/receiving device 4 in the station house Y, and receiving an optical signal from the optical transponder 7 of the optical transmitting/receiving device 4.

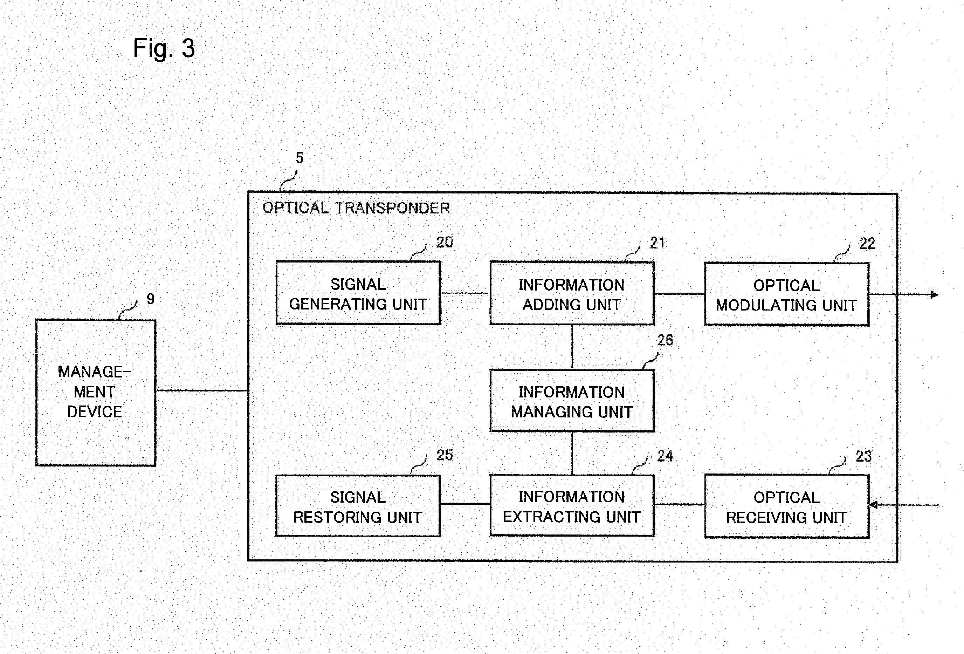

Fig. 3 is a block diagram illustrating one example of a configuration of the optical transponder of the optical transmitting/receiving device. As illustrated in Fig. 3, the optical transponder 5 includes a signal generating unit 20, an information adding unit 21, an optical modulating unit 22, an optical receiving unit 23, an information extracting unit 24, a signal restoring unit 25, and an information managing unit 26.

The signal generating unit 20 generates a main signal, and the information adding unit 21 adds measurement information to the generated main signal. The measurement information is added to the main signal as, for example, overhead information. The measurement information is information for measurement of a transmission delay time, and generated in the information managing unit 26. One example of measurement information is time information. The optical modulating unit 22 converts the main signal to which the measurement information is added into an optical signal, and then transmits the optical signal to the transmission path.

Furthermore, the optical receiving unit 23 receives the optical signal transmitted from the opposed optical transmitting/receiving device 4 in the station house Y, and then converts the optical signal into a main signal. The information extracting unit 24 extracts the measurement information added to the main signal, and the information managing unit 26 acquires a transmission delay time on the basis of the extracted measurement information. Then the information managing unit 26 sends the acquired transmission delay time to the management device 9. Note that the main signal is restored in the signal restoring unit 25.

For example, when the measurement information is time information, the transmission delay time is acquired by use of a time included in the time information and a time at which the information managing unit 26 receives the measurement information from the information extracting unit 24. Note that the transmission delay time means a round-trip delay time (round-trip time) in which a round trip is made between devices connected by a transmission path, unless otherwise stated.

The optical transponder 7 of the optical transmitting/receiving device 4 has a configuration similar to that of the optical transponder 5. However, when measurement information is added to an optical signal received by the optical transponder 7, a part of the configuration of the optical transponder 7 functions as below.

First, the optical receiving unit 23 of the optical transponder 7 receives an optical signal transmitted from the optical transmitting/receiving device 3 in the station house X, and then converts the optical signal into a main signal. Further, the information extracting unit 24 extracts measurement information of the optical transponder 5 on the station house X side from the main signal, and the information managing unit 26 delivers the measurement information on the station house X side to the information adding unit 21.

The signal generating unit 20 generates a main signal, and the information adding unit 21 adds the measurement information on the station house X side to the generated main signal. The optical modulating unit 22 converts the main signal to which the measurement information is added into an optical signal, and then transmits the optical signal to the transmission path. Note that the configuration of the optical transponder 5 for measurement of a transmission delay time is not limited to the above. A configuration other than the above may be used for a configuration of the optical transponder 5 which adds time information to output light, or a configuration of the optical transponder 5 which extracts time information from received light. For example, the optical transponder 5 is configured to transmit and receive time information by overhead parts of the optical transponders 5 and 7, but may be configured to use a special wavelength or a special transmitter/receiver for transmitting/receiving of time information.

Next, an overview of the management device 9 is described. The management device 9 pre-registers, as route delay information, a transmission delay time corresponding to a transmission route of a transmission path between optical transmitting/receiving devices, and collects, as a measurement delay time, the transmission delay time of the transmission route of the transmission path 10 from the optical transponder 5 when it is necessary to identify a transmission route in the transmission path. Then, the management device 9 identifies a transmission route corresponding to the measurement delay time on the basis of the collected measurement delay time and the route delay information.

A configuration of the management device 9 is described below with reference to the drawings. As illustrated in Fig. 1, the management device 9 includes a collecting unit 91 and an identifying unit 92. Moreover, it is assumed that the management device 9 is able to communicate with the optical transponder 5 in the station house X by a communication unit (not illustrated).

The collecting unit 91 of the management device 9 registers transmission delay times corresponding to the transmission route 1-1 including the route A and the transmission route 1-2 including the route B, respectively, in the transmission path 10 between the optical transmitting/receiving devices 3 and 4, in a storage unit (not illustrated) of the management device 9 as route delay information. Note that the route delay information is a transmission delay time of the transmission route collected from the optical transponder 5 of the optical transmitting/receiving device 3 by the collecting unit 91 of the management device 9 before start of operation of the optical transmission system.

Next, when the management device 9 may not acquire information in the transmission path 10 for such a reason as an equipment breakdown or a lack of a communication function in the transmission path 10, the collecting unit 91 of the management device 9 communicates with the optical transponder 5 of the optical transmitting/receiving device 3, and collects a measurement delay time being a transmission delay time of the transmission path 10 measured by the optical transponder 5.

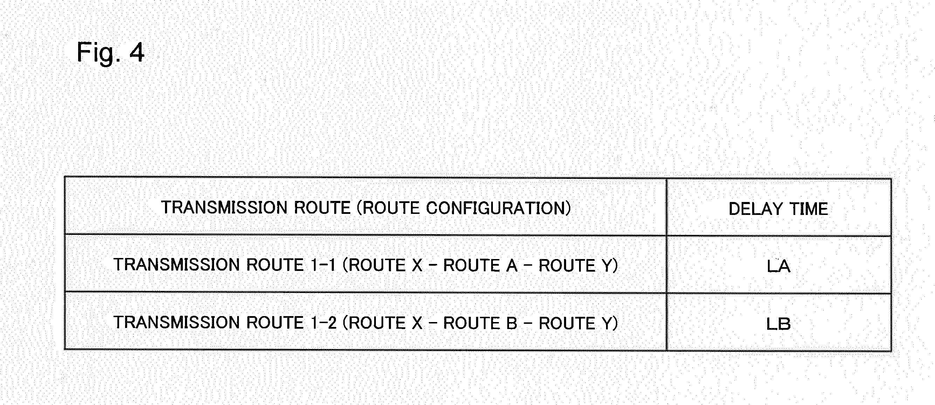

Fig. 4 is a table diagram illustrating a relation between a transmission delay time acquired by the optical transponder 5 and a route. In the transmission path 10 according to the first example embodiment, two routes connecting the optical transmitting/receiving devices 3 and 4 are the transmission route 1-1 constituted by the route X - the route A - the route Y, and the transmission route 1-2 constituted by the route X - the route B - the route Y. As illustrated in Fig. 4, a transmission delay time of the transmission route 1-1 measured by the optical transponder 5 is LA (microseconds to milliseconds), and a transmission delay time in the transmission route 1-2 is LB (microseconds to milliseconds). Note that a transmission delay time is assumed to be obtained by measuring an optical signal through the same route on an outward way and a return way between the optical transmitting/receiving devices.

When it is assumed that a time in which the optical transponder 7 of the optical transmitting/receiving device 4 returns measurement information is constant, a transmission delay time of the transmission path 10 measured by the information managing unit 26 of the optical transponder 5 changes depending on a route length of the transmission path 10. When a route length of the route A of the transmission route 1-1 is shorter than a route length of the route B of the transmission route 1-2 in the transmission route illustrated in Fig. 4, a relation between transmission delay times of the transmission route 1-1 and the transmission route 1-2 is LA (microseconds to milliseconds) < LB (microseconds to milliseconds).

Then, the identifying unit 92 of the management device 9 identifies a transmission route corresponding to the measurement delay time on the basis of the collected measurement delay time and the registered route delay information. Note that when the measurement delay time is between the transmission delay time LA (microseconds to milliseconds) and the transmission delay time LB (microseconds to milliseconds), the identifying unit 92 identifies the transmission delay time close to the measurement delay time as a corresponding transmission route.

For example, when the measurement delay time collected by the collecting unit 91 is closer to the transmission delay time LB (microseconds to milliseconds) of the transmission route 1-2 than the transmission delay time LA (microseconds to milliseconds) of the transmission route 1-1, the identifying unit 92 identifies the transmission route 1-2 as a transmission route corresponding to the collected measurement delay time.

Note that identification of a transmission route by the identifying unit 92 is not limited to the above. For example, it is also possible to use a method in which the collecting unit 91 compares a collected measurement delay time with a previously registered measurement delay time for each transmission route, and identifies a transmission route based on an increase or a decrease of the measurement delay time.

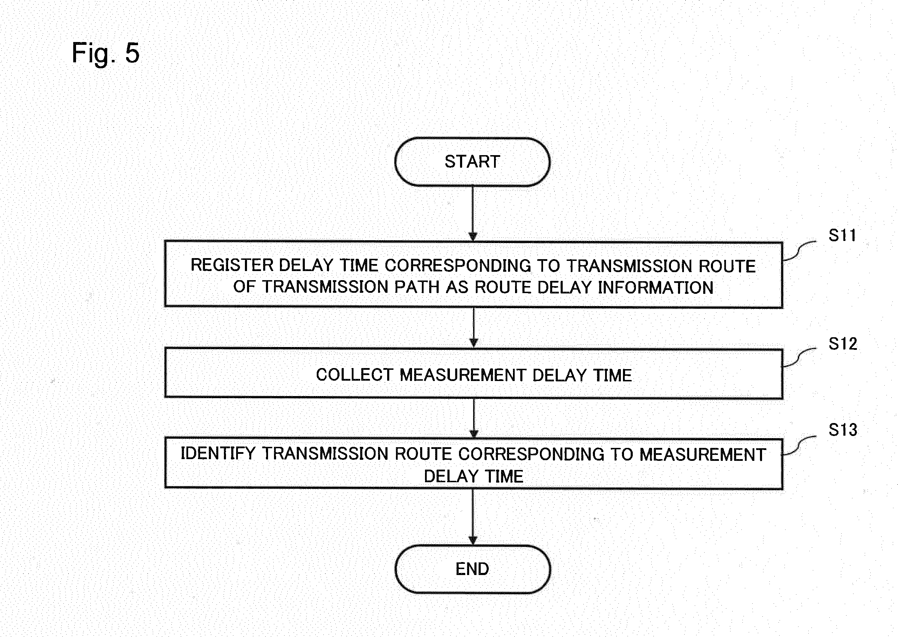

Next, an operation of the management device according to the first example embodiment is described with reference to the drawings. Fig. 5 is a flowchart illustrating the operation of the management device. The collecting unit 91 of the management device 9 registers, in the storage unit (not illustrated) of the management device 9, route delay information indicating a transmission delay time for each transmission route of the transmission path 10 between the optical transmitting/receiving devices 3 and 4 (step S11).

Next, the collecting unit 91 of the management device 9 communicates with the optical transponder 5 of the optical transmitting/receiving device 3, and collects a measurement delay time being a transmission delay time of the transmission path 10 measured by the optical transponder 5 (step S12).

Then, the identifying unit 92 of the management device 9 identifies a transmission route corresponding to the measurement delay time on the basis of the collected measurement delay time and the registered route delay information (step S13).

Advantageous Effects of First Example Embodiment

According to the first example embodiment, a transmission route of a transmission path may be identified, even when communication with equipment disposed on the transmission path of an optical transmission system is not possible. This is because, on the basis of route delay information indicating a transmission delay time for each transmission route, and a measurement delay time of the transmission path collected from an optical transmitting/receiving device of the optical transmission system, the management device identifies a transmission route corresponding to the measurement delay time.

Second Example Embodiment

Next, an optical transmission system and a management device according to a second example embodiment are described. The second example embodiment is an example in which optical transmitting/receiving devices 3 and 4 of the optical transmission system include a plurality of optical transponders, and a management device 9 collects transmission delay times in respective transmission paths from the plurality of optical transponders of the optical transmitting/receiving device 3, and identifies transmission routes of the transmission paths.

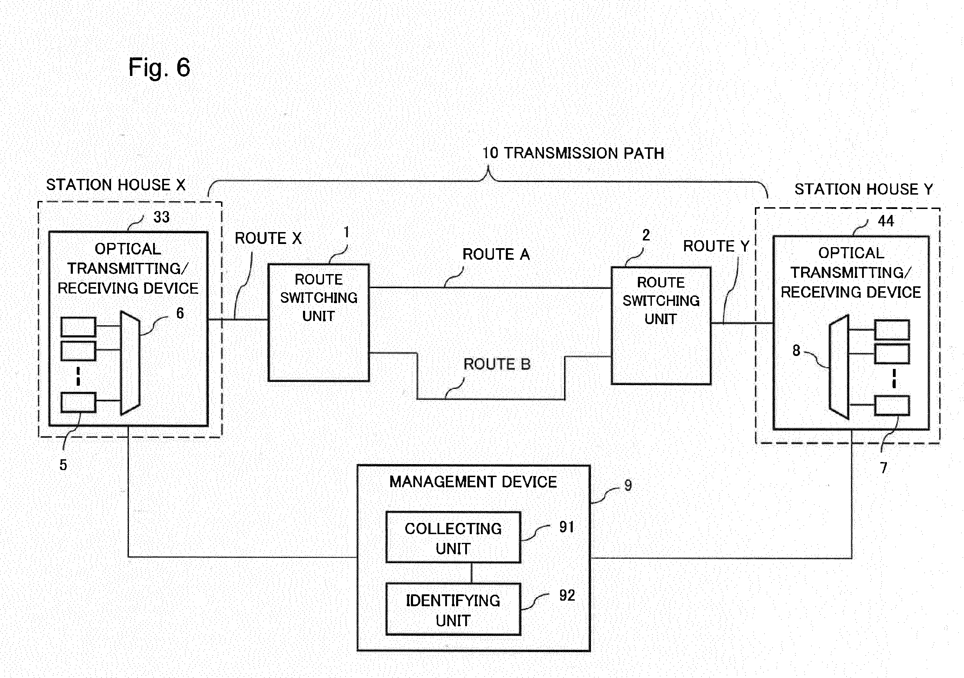

Fig. 6 is a block diagram illustrating configurations of the management device and the optical transmission system according to the second example embodiment. Hereinafter, in the second example embodiment, points different from those in the first example embodiment are described in detail, the same configurations as those in the first example embodiment are indicated with the same reference signs, and a detailed description thereof is thus omitted.

The optical transmission system according to the second example embodiment includes an optical transmitting/receiving device 33, an optical transmitting/receiving device 44, and a transmission path 10 connecting the optical transmitting/receiving device 33 and the optical transmitting/receiving device 44. The transmission path 10 between the optical transmitting/receiving device 33 and the optical transmitting/receiving device 44 is the same as the transmission path 10 according to the first example embodiment.

Fig. 6 is a block diagram illustrating a configuration of the optical transmitting/receiving device 33 of the optical transmission system according to the second example embodiment. As illustrated in Fig. 6, the optical transmitting/receiving device 33 of the optical transmission system includes an optical transponder 5, and a wavelength multiplexing/demultiplexing unit 6 which multiplexes/demultiplexes wavelengths of an optical signal. A plurality of optical transponders 5 which transmit and receive optical signals are disposed for each wavelength channel.

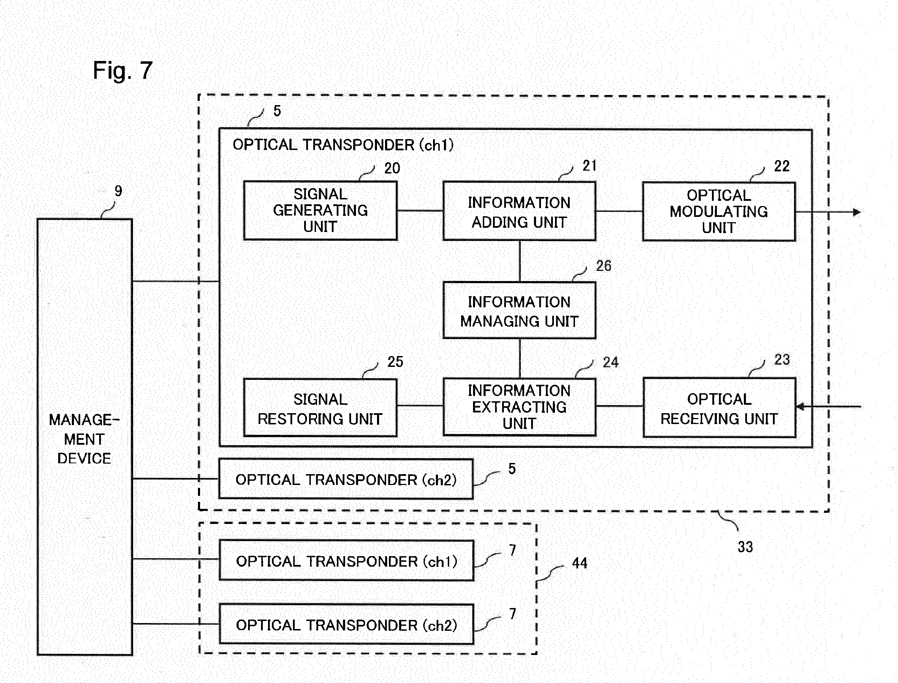

Fig. 7 is a block diagram illustrating a configuration of the optical transponder according to the second example embodiment. As illustrated in Fig. 7, it is assumed that the optical transponders 5 and 7 of the optical transmitting/receiving devices 33 and 44 according to the second example embodiment transmit and receive optical signals of different wavelength channels, respectively. Other than this, configurations of the optical transponders 5 and 7 according to the second example embodiment are similar to the configuration of the optical transponder 5 according to the first example embodiment. Note that the optical transponders 5 and 7 of the optical transmitting/receiving devices 33 and 44 are assumed to be able to communicate with the management device 9.

In the optical transmitting/receiving device 33, the plurality of optical transponders 5 output optical signals of different wavelengths, respectively. The wavelength multiplexing/demultiplexing unit 6 wavelength-multiplexes the optical signals output from the plurality of optical transponders 5, and then transmits the wavelength-multiplexed optical signal to the transmission path 10. A wavelength multiplexing/demultiplexing unit 8 of the optical transmitting/receiving device 44 wavelength-demultiplexes the optical signal which have passed through the transmission path 10, and each of the optical transponders 7 receives the wavelength-demultiplexed optical signals.

Each of the optical transponders 5 of the optical transmitting/receiving device 33 according to the second example embodiment has a function similar to that of the optical transponder 5 of the optical transmitting/receiving device 3 according to the first example embodiment. Specifically, each of the optical transponders 5 of the optical transmitting/receiving device 33 transmits an optical signal to which measurement information is added to the optical transmitting/receiving device 44, and receives an optical signal to which the measurement information is added, and which is transmitted from each of the optical transponders 7 of the optical transmitting/receiving device 44. Then, each of the optical transponders 5 acquires a transmission delay time of the transmission path on the basis of the measurement information added to the received optical signal.

Next, the management device 9 according to the second example embodiment is described. A configuration of the management device 9 according to the second example embodiment is similar to that of the management device 9 according to the first example embodiment in including a collecting unit 91 and an identifying unit 92 as illustrated in Fig. 6. A detailed description of the configuration of the management device 9 according to the second example embodiment is omitted. Note that the management device 9 according to the second example embodiment is different from the management device 9 according to the first example embodiment in that the management device 9 according to the second example embodiment is able to communicate with each of the optical transponders 5 of the optical transmitting/receiving device 33, and may collect a measurement delay time of the transmission path from a desired optical transponder 5 among the plurality of optical transponders 5.

An operation of the management device 9 according to the second example embodiment is described. The operation (the flowchart in Fig. 5) of the management device 9 according to the first example embodiment may also be applied to the operation of the management device 9 according to the second example embodiment. First, the management device 9 according to the second example embodiment registers a transmission delay time for each transmission route of the transmission path 10 between the optical transmitting/receiving devices 33 and 44, in a storage unit (not illustrated) as route delay information (step S11).

When it is necessary to identify a transmission route in the transmission path, the management device 9 collects, as a measurement delay time, a transmission delay time of the transmission route of the transmission path 10 from the optical transponder 5 (step S12). In this instance, the management device 9 according to the second example embodiment may collect the measurement delay time being the transmission delay time of the transmission route of the transmission path 10 from a desired optical transponder 5 among the plurality of optical transponders 5. Then, the management device 9 identifies a transmission route corresponding to the measurement delay time on the basis of the collected measurement delay time and the route delay information (step S13).

Modification Example of Second Example Embodiment

Although each optical transponder 5 on a station house X side measures a transmission delay time of the transmission path 10 in the example indicated in the second example embodiment described above, the disclosed subject matter is not limited thereto. For example, each optical transponder 7 on a station house Y side may also be provided with a function of measuring the transmission delay time of the transmission path 10. In this case, the collecting unit 91 of the management device 9 collects the transmission delay time measured by each optical transponder 7.

Advantageous Effects of Second Example Embodiment

According to the management device in the second example embodiment, a transmission route of a transmission path may be identified, even when communication with equipment disposed on the transmission path of an optical transmission system is not possible. This is because, on the basis of route delay information indicating a relation between a transmission route and a transmission delay time corresponding to the transmission route, and a measurement delay time of the transmission path collected from the optical transmitting/receiving device of the optical transmission system, the management device according to the second example embodiment identifies a transmission route corresponding to the measurement delay time, similarly to the management device 9 according to the first example embodiment.

Furthermore, according to the management device 9 in the second example embodiment, even when the transmission delay time of the transmission path 10 may not be measured due to breakdown of the optical transponder 5 having a certain wavelength channel of the optical transmitting/receiving device 33, the management device may collect a measurement delay time by measuring a delay time of the transmission path 10 from the optical transponder 5 of another wavelength channel. Moreover, the optical transmitting/receiving device 33 according to the second example embodiment may also simultaneously measure transmission delay times using different wavelength channels by the wavelength multiplexing/demultiplexing unit. Thus, after breakdown of the optical transponder 5 of a certain wavelength channel, the management device 9 may collect a measurement delay time without again measuring a transmission delay time by the optical transponder 5 of another wavelength channel, and a time required to collect a measurement delay time may be shortened.

Third Example Embodiment

Next, a management device and an optical transmission system according to a third example embodiment are described. The third example embodiment is an example in which a function adding unit is added onto the transmission path 10 of the optical transmission system according to the second example embodiment.

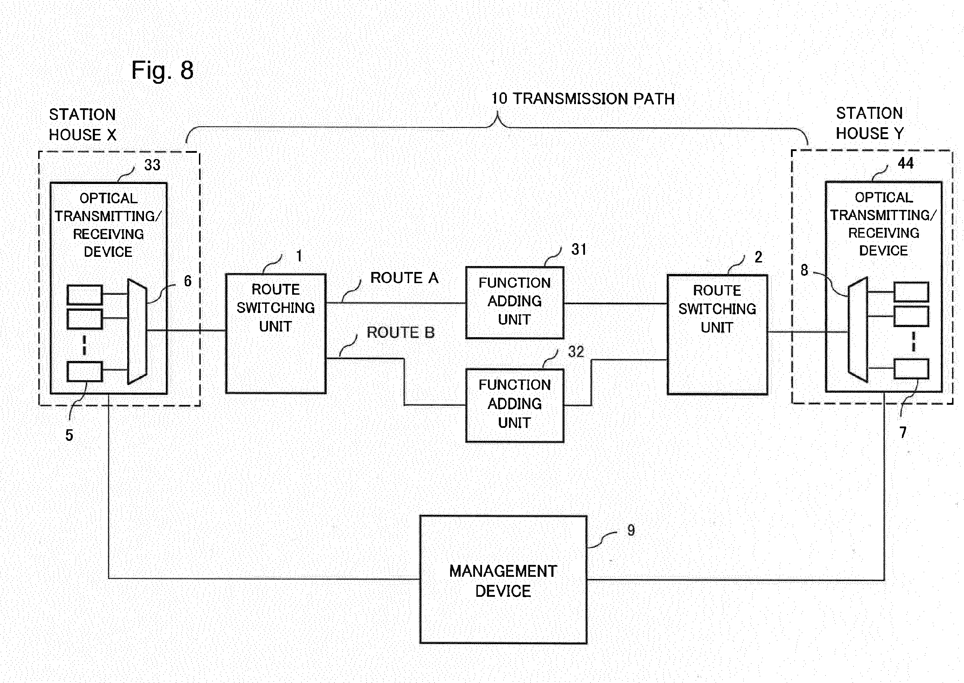

Fig. 8 is a block diagram illustrating configurations of the management device and the optical transmission system according to the third example embodiment. As illustrated in Fig. 8, the optical transmission system according to the third example embodiment has a configuration in which a function adding unit 31 and a function adding unit 32 are added onto the routes A and B of the transmission path 10 according to the second example embodiment, respectively.

For example, it is assumed that the function adding unit 31 and the function adding unit 32 are optical add-drop multiplexers (OADMs) having different add/drop branching ratios. In the optical transmission system according to the third example embodiment, the route switching units 1 and 2 in the transmission path 10 switch routes, and then either the function adding unit 31 or the function adding unit 32 functions accordingly. Note that the function adding unit 31 may be disposed in any place on the route A, and the same also applies to the function adding unit 32 on the route B.

Optical transponders 5 and 7 according to the third example embodiment have functions similar to those of the optical transponders 5 and 7 according to the second example embodiment. Specifically, the optical transponder 5 of an optical transmitting/receiving device 33 transmits an optical signal to which measurement information is added to an optical transmitting/receiving device 44, and receives, from the optical transponder 7 of the optical transmitting/receiving device 44, an optical signal to which the measurement information is added. Then, the optical transponder 5 acquires a transmission delay time of the transmission path on the basis of the measurement information added to the received optical signal.

Note that, when the function adding units 31 and 32 are OADMs, optical signal output by the optical transponders 5 and 7 for measurement of a transmission delay time are on wavelength channels transferred between the optical transmitting/receiving devices 33 and 44 without being dropped by the OADMs.

Next, a management device 9 according to the third example embodiment is described. Similarly to the management device 9 illustrated in Fig. 6, the management device 9 according to the third example embodiment illustrated in Fig. 8 includes a collecting unit 91 and an identifying unit 92. Similarly to the management device 9 according to the second example embodiment, the management device 9 according to the third example embodiment is able to communicate with each of the optical transponders 5 of the optical transmitting/receiving device 33. The collecting unit 91 of the management device 9 collects a measurement delay time being a delay time of the transmission path measured by the optical transponder 5, and the identifying unit 92 identifies a transmission route corresponding to the measurement delay time on the basis of pre-registered route delay information between the optical transmitting/receiving devices 33 and 44 and the collected measurement delay time.

As described above, even when the function adding unit is added onto the transmission path 10 in the optical transmission system, it is possible to identify a transmission route on the transmission path 10 by measuring a transmission delay time between the optical transmitting/receiving devices 33 and 44.

Modification Example of Third Example Embodiment

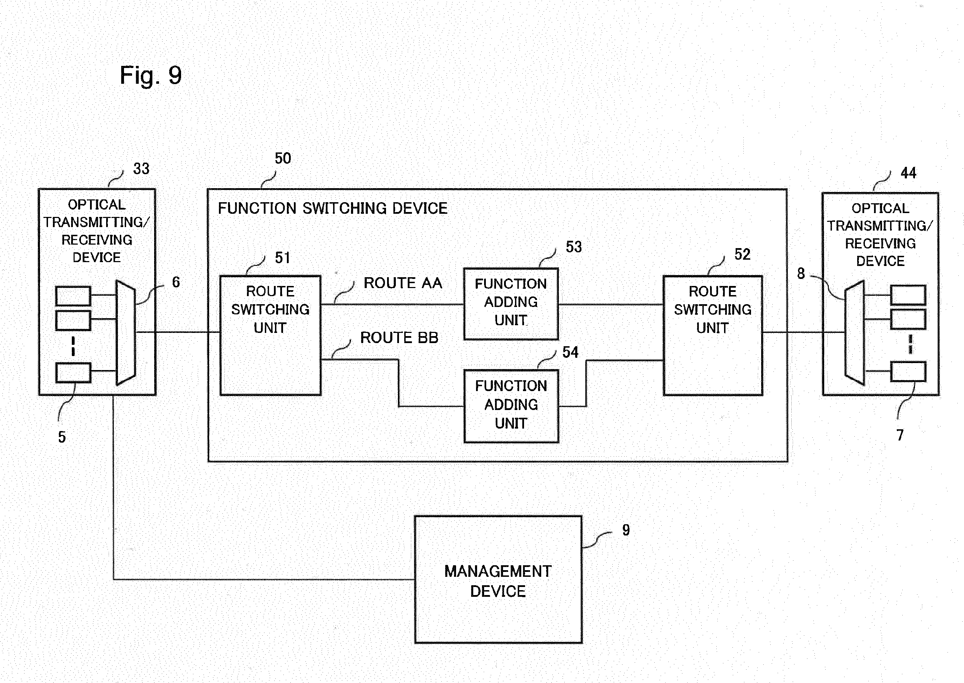

Next, a modification example of the third example embodiment is described. The modification example of the third example embodiment is an example in which a function switching device 50 is disposed between the optical transmitting/receiving devices 33 and 44, and transmission routes in the function switching device 50 have different route lengths. Fig. 9 is a block diagram illustrating a configuration of an optical transmission system according to the modification example of the third example embodiment. In a description of the configuration according to the modification example of the third example embodiment illustrated in Fig. 9, the same configurations as those in the third example embodiment are given the same reference signs, and a detailed description thereof is thus omitted. As illustrated in Fig. 9, the optical transmission system in the modification example of the third example embodiment includes the optical transmitting/receiving device 33, the optical transmitting/receiving device 44, and the function switching device 50. The function switching device 50 includes a route switching unit 51, a route switching unit 52, and a route AA and a route BB having different route lengths between the route switching units 51 and 52. For example, it is assumed that the function adding units 53 and 54 are OADMs having different add/drop branching ratios. The route switching units 51 and 52 switch routes, and then either the function adding unit 53 or the function adding unit 54 functions accordingly.

Herein, in the modification example of the third example embodiment, the transmission route between the optical transmitting/receiving device 33 and the route switching unit 51 is the same as the transmission route between the route switching unit 52 and the optical transmitting/receiving device 44, and there is no difference of measured transmission delay times between the optical transmitting/receiving devices 33 and 44.

On the other hand, transmission delay times differ between the optical transmitting/receiving devices 33 and 44 due to passage through the route AA and the route BB in the function switching device 50 between the route switching unit 51 and the route switching unit 52 in the function switching device 50.

Similarly to the management device 9 according to the third example embodiment, the management device 9 according to the modification example of the third example embodiment collects a measurement delay time measured between the optical transmitting/receiving devices, and identifies a transmission route in the function switching device 50 on the basis of pre-registered route delay information between the optical transmitting/receiving devices and the collected measurement delay time.

Advantageous Effects of Third Example Embodiment

According to the management device in the third example embodiment, in an optical transmission system in which a function adding unit is provided on a transmission route of a transmission path, the transmission route of the transmission path may be identified, even when communication with equipment disposed on the transmission path of the optical transmission system is not possible. This is because, on the basis of route delay information indicating a relation between a transmission route and a transmission delay time corresponding to the transmission route, and a measurement delay time of the transmission path collected from the optical transmission system, the management device 9 according to the third example embodiment identifies a transmission route corresponding to the measurement delay time, similarly to the management devices 9 according to the first and second example embodiments.

Furthermore, according to the management device 9 in the third example embodiment, it is also possible to identify a transmission route in the function switching device 50 disposed between the optical transmitting/receiving devices of the optical transmission system. This is because a transmission route in the function switching device 50 is identified by use of a difference of transmission delay times resulting from a route length difference of transmission routes in the function switching device 50.

Fourth Example Embodiment

Next, a management device and an optical transmission system according to a fourth example embodiment are described. The fourth example embodiment is an example in which a transmission path includes a plurality of transmission routes, and the transmission routes are each configured by a combination of a plurality of route sections.

Note that, in the fourth example embodiment, a designed transmission delay time is obtained by use of a designed route length in the transmission path of the optical transmission system, and a propagation speed of an optical signal, and used as route delay information. For example, when the transmission path is configured by an optical fiber, the designed transmission delay time may be obtained from a propagation speed of an optical signal propagating in the optical fiber, and a length of a transmission route of the transmission path.

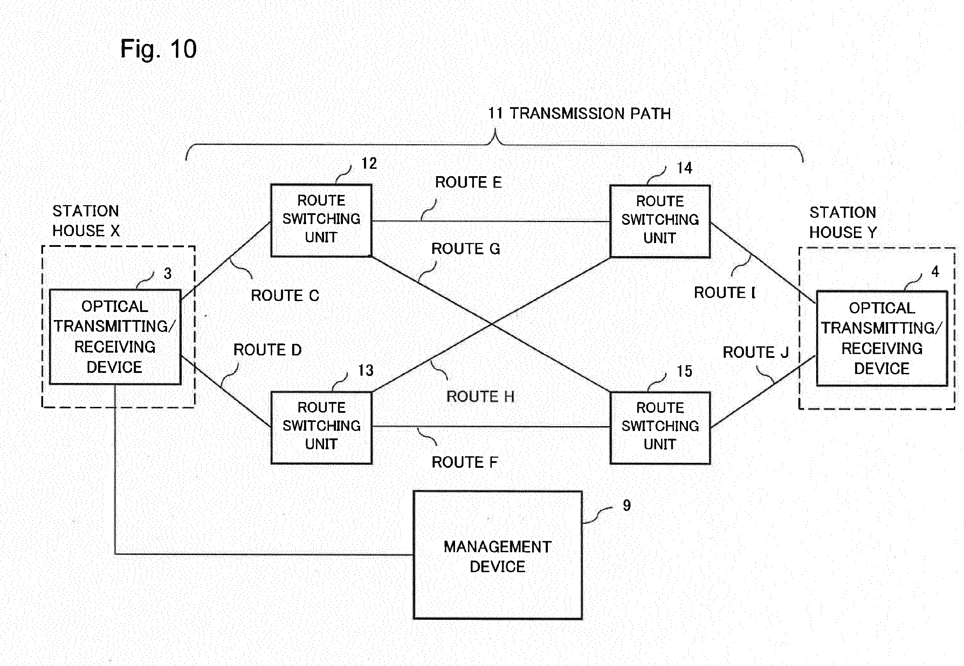

Fig. 10 is a block diagram illustrating configurations of the management device and the optical transmission system according to the fourth example embodiment. As illustrated in Fig. 10, the optical transmission system according to the fourth example embodiment includes an optical transmitting/receiving device 3, an optical transmitting/receiving device 4, and a transmission path 11. The optical transmitting/receiving devices 3 and 4 according to the fourth example embodiment are similar to the optical transmitting/receiving devices 3 and 4 according to the first example embodiment.

Route switching units 12, 13, 14, and 15 are disposed on the transmission path 11 of the optical transmission system according to the fourth example embodiment. By the disposition of the route switching units 12, 13, 14, and 15, eight individual routes C, D, E, F, G, H, I, and J are present in the transmission path 11. Note that route switching functions of the route switching units 12, 13, 14, and 15 are assumed to be equivalent to one another.

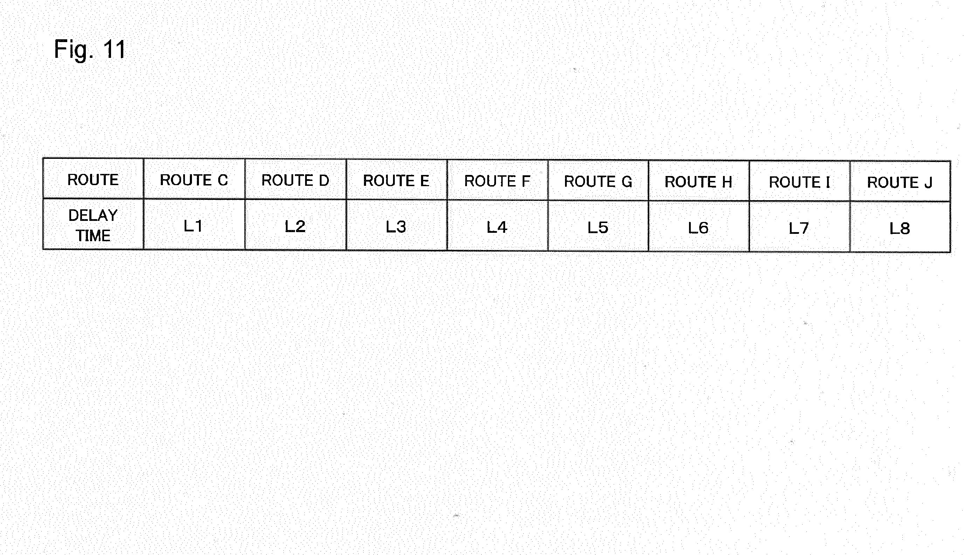

Fig. 11 is a table diagram illustrating the individual routes constituting the transmission path 11 and transmission delay times of the individual routes according to the fourth example embodiment. The respective transmission delay times of the routes C to J illustrated in Fig. 11 represent designed transmission delay times in round trips on the individual routes. Note that the designed transmission delay times of the respective transmission route preferably include transmission delay times within the route switching units 12 to 15 in addition to the transmission delay times of the individual routes. For simplicity of description, the transmission delay times within the route switching units are omitted in the description of the fourth example embodiment.

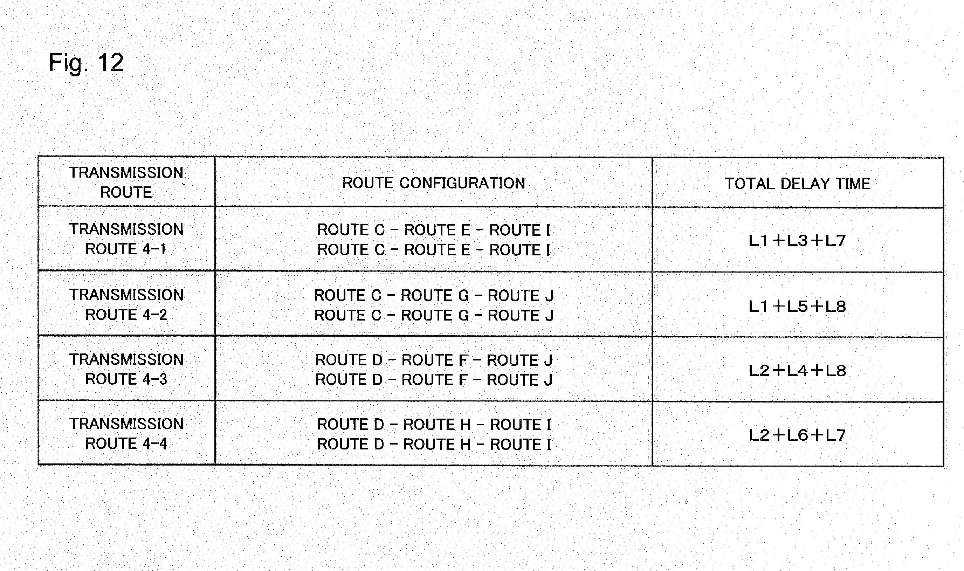

Fig. 12 is a table diagram illustrating route delay information in the transmission path according to the fourth example embodiment. The route delay information illustrated in Fig. 12 includes a transmission route, a route configuration of the transmission route, and a total delay time corresponding to the transmission route. It is assumed that, in route configurations of a transmission route 4-1 to a transmission route 4-4, an optical signal travels in a forward direction between optical transmitting/receiving devices on both an outward way and a return way, for simplification of a description. Specifically, in an outward way from the optical transmitting/receiving device 3 to the optical transmitting/receiving device 4, an optical signal which has reached the route switching unit 14 from the route switching unit 12 through the route E travels toward the optical transmitting/receiving device 4 through the route I rather than the route H due to the route switching unit 14.

Moreover, it is assumed that a transmission route makes a round trip following the same route configuration on an outward way and a return way. For example, when an outward way of the transmission route 4-1 is the route C => the route E => the route I, a return way thereof also follows the route C <= the route E <= the route I.

Furthermore, a total delay time in a transmission route is a total of transmission delay times of the respective routes constituting the transmission route. Total delay times of the transmission routes 4-1 to 4-4 are different values, and for example, a relation of the total delay times of the transmission routes 4-1 to 4-4 is

$$L1+L3+L7<L1+L5+L8<L2+L4+L8<L2+L6+L7.$$

Next, identification of a transmission route of the optical transmission system by a management device 9 according to the fourth example embodiment is described. First, a collecting unit 91 of the management device 9 acquires route delay information corresponding to a transmission route of the transmission path 11 from an external device (not illustrated), and registers the route delay information in a storage unit (not illustrated) of the management device 9. Herein, the route delay information acquired by the collecting unit 91 is designed route delay information of the transmission path of the optical transmission system illustrated in Fig. 12.

Then, when in a situation where the management device 9 may not communicate with the route switching units 12 to 15 disposed on the transmission path 11 during operation of the optical transmission system, the management device 9 identities a transmission route of the optical transmission system.

First, the collecting unit 91 of the management device 9 instructs the optical transmitting/receiving device 3 to measure a transmission delay time. In response to the instruction from the management device 9, an optical transponder 5 of the optical transmitting/receiving device 3 transmits an optical signal to which measurement information is added with the optical transmitting/receiving device 4 as a destination, and receives an optical signal which is returned from an optical transponder 7 of the optical transmitting/receiving device 4, and to which the measurement information is added. Then, the optical transponder 5 measures a transmission delay time of the transmission path on the basis of the measurement information added to the received optical signal.

The collecting unit 91 of the management device 9 collects a measurement delay time being a delay time measured by the optical transponder 5, and the identifying unit 92 identifies a transmission route corresponding to the measurement delay time on the basis of the collected measurement delay time, and the route delay information illustrated in Fig. 12 registered in the storage unit (not illustrated) of the management device 9.

Modification Example of Fourth Example Embodiment

In the example described in the fourth example embodiment above, the collecting unit 91 of the management device 9 acquires route delay information from an external device (not illustrated) before there comes a situation where communication with the route switching units 12 to 15 on the transmission path 11 is not possible, however, the disclosed subject matter is not limited thereto. Designed route delay information makes it possible to acquire route delay information from an external device (not illustrated) even after there comes a situation where communication with the route switching units 12 to 15 is not possible.

Moreover, in the optical transmission system according to the fourth example embodiment, it is also possible to adopt a configuration in which route delay information is collected from a plurality of optical transponders by use of optical transmitting/receiving devices 33 and 44 instead of the optical transmitting/receiving devices 3 and 4.

Advantageous Effects of Fourth Example Embodiment

According to the management device in the fourth example embodiment, a transmission route of a transmission path may be identified, even when communication with equipment disposed on the transmission path of an optical transmission system is not possible. This is because, on the basis of route delay information indicating a transmission delay time for each transmission route, and a measurement delay time of the transmission path collected from the optical transmitting/receiving device of the optical transmission system, the management device according to the fourth example embodiment identifies a transmission route corresponding to the measurement delay time.

Moreover, according to the management device in the fourth example embodiment, even after communication with equipment disposed on the transmission path of the optical transmission system becomes impossible, route delay information of a transmission route in the optical transmission system may be registered. This is because, route delay information based on a designed transmission route and transmission delay time of the transmission path of the optical transmission system is registered.

Fifth Example Embodiment

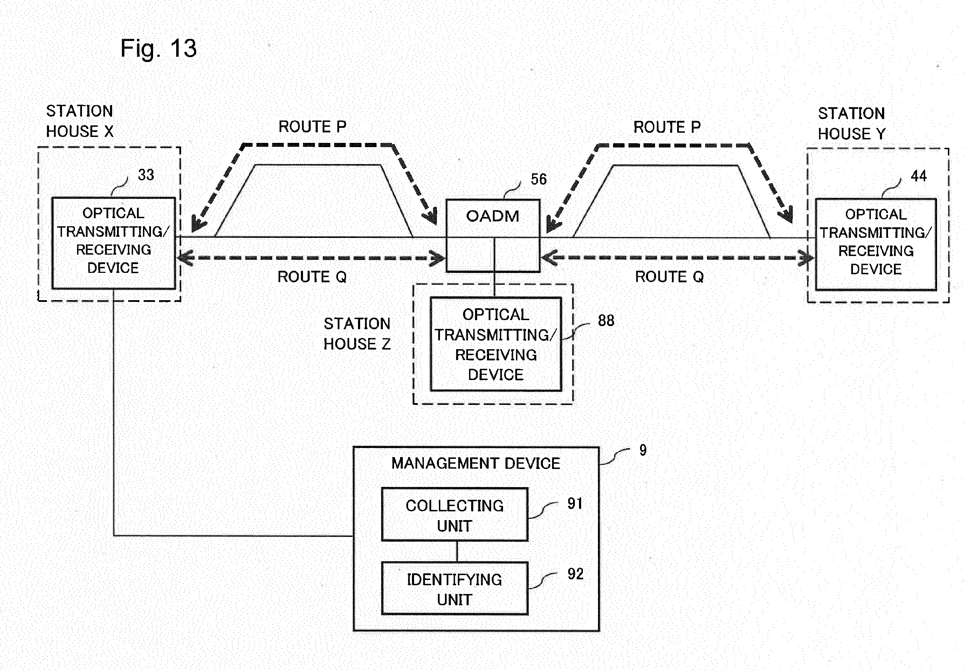

Next, a management device and an optical transmission system according to a fifth example embodiment are described. Fig. 13 is a block diagram illustrating a configuration of the optical transmission system in the fifth example embodiment. In the management device and the optical transmission system according to the fifth example embodiment illustrated in Fig.13, the similar configurations to those in the second example embodiment are given the same reference signs, and a detailed description thereof is thus omitted.

The optical transmission system according to the fifth example embodiment includes an optical transmitting/receiving device 33 disposed in a station house X, an optical transmitting/receiving device 44 disposed in a station house Y, and a transmission path connecting the optical transmitting/receiving devices 33 and 44. An OADM 56 is disposed on the transmission path, routes P and Q are formed by route switching units (not illustrated) between the optical transmitting/receiving device 33 and the OADM 56, and routes P and Q are formed by route switching units (not illustrated) between the optical transmitting/receiving device 44 and the OADM 56. As illustrated in Fig. 13, a route configuration has two redundant routes of the route P and the route Q disposed on the transmission path across the OADM 56. The transmission path of the optical transmission system according to the fifth example embodiment has four transmission routes by combinations of the routes P and the routes Q between the station house X and the station house Y (between the optical transmitting/receiving devices 33 and 44). It is assumed that transmission delay times of the routes P are the same between the station house X and the OADM 56 and between the OADM 56 and the station house Y, and transmission delay times of the routes Q are also the same between the station house X and the OADM 56 and between the OADM 56 and the station house Y.

The OADM 56 has a function of branching optical signals of some wavelength channels output from the optical transmitting/receiving device 33 in the station house X into an optical transmitting/receiving device 88 in a station house Z, and inserting the optical signals of the wavelength channels output from the optical transmitting/receiving device 88 in the station house Z, and then transmitting to the optical transmitting/receiving device 33. Thereby, the optical transmitting/receiving device 33 in the station house X may communicate with the optical transmitting/receiving device 44 in the station house Y and the optical transmitting/receiving device 88 in the station house Z, respectively.

Note that, in the transmission path of the optical transmission system according to the fifth example embodiment, the station house Z (the optical transmitting/receiving device 88) is disposed close to the OADM 56, and a transmission delay time between the station houses X and Z (between the optical transmitting/receiving devices 33 and 88) is assumed to be treated as a transmission delay time between the station house X and the OADM 56.

The management device 9 according to the fifth example embodiment is connected to the optical transmitting/receiving device 33 in the station house X, and includes a collecting unit 91 and an identifying unit 92 in the second example embodiment. First, the collecting unit 91 of the management device 9 registers in a storage unit (not illustrated) of the management device 9 as route delay information. The route delay information includes four transmission routes (transmission routes 5-1 to 5-4) between the station houses X and Y (between the optical transmitting/receiving devices 33 and 44) and transmission delay times thereof collected from an optical transponder 5 of an optical transmitting/receiving device 33 by the collecting unit 91 of the management device 9 before start of operation of the optical transmission system. Further, the route delay information includes a transmission delay time between the station houses X and Z (between the optical transmitting/receiving devices 33 and 88).

The collecting unit 91 of the management device 9 instructs the optical transponder 5 of the optical transmitting/receiving device 33 to measure transmission delay times between the station house X and the station house Y and between the station house X and the station house Z. After the measurement of the transmission delay times between the station house X and the station house Y and between the station house X and the station house Z by the optical transponder 5, the collecting unit 91 collects measurement delay times between the station house X and the station house Y and between the station house X and the station house Z.

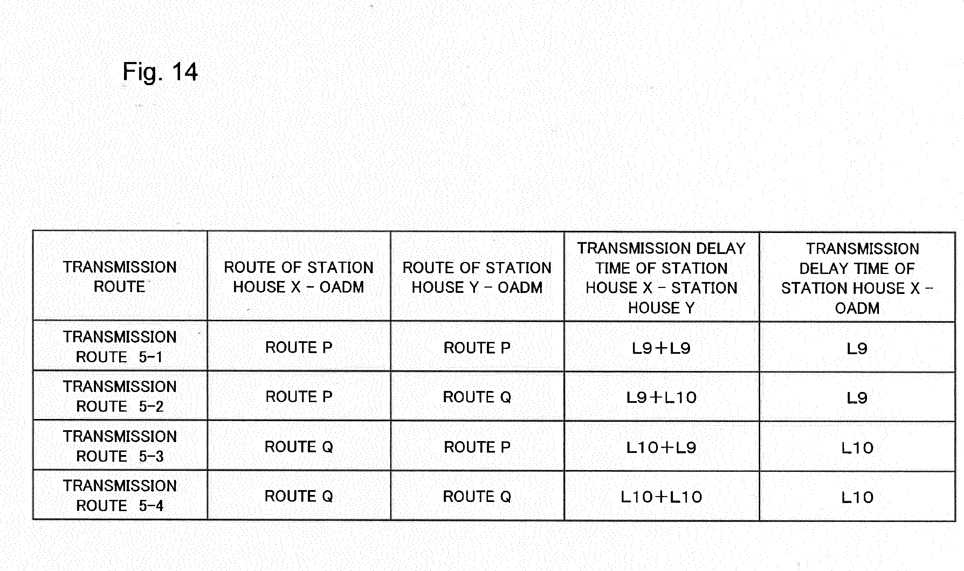

Fig. 14 is a table diagram illustrating route delay information of the transmission path in the optical transmission system according to the fifth example embodiment. As illustrated in Fig. 14, the transmission routes 5-1 to 5-4 are configured by a combination of redundant routes (the route P and the route Q) between the station house X and the OADM and redundant routes (the route P and the route Q) between the station house Y and the OADM.

Because the transmission route 5-1 and the transmission route 5-4 have a difference of transmission delay times thereof, the identifying unit 92 may identify a transmission route in the management device 9 according to the second example embodiment. On the other hand, the transmission route 5-2 and the transmission route 5-3 are different transmission routes, but have the same transmission delay time between the station houses X and Y (between the optical transmitting/receiving devices 33 and 44). Therefore, it is not possible to identify the transmission route 5-2 or the transmission route 5-3 only by the transmission delay time between the station houses X and Y.

Thus, when different transmission routes have the same transmission delay time in route delay information, the identifying unit 92 identifies a transmission route on the basis of route delay information including a transmission delay time between the station houses X and Z (between the station house X and the OADM), and the collected measurement delay time between the station houses X and Z (between the station house X and the OADM).

For example, when a measurement delay time between the station houses X and Z (between the station house X and the OADM) is L9, the identifying unit 92 identifies the transmission route between the station houses X and Y as the transmission route 5-2 from a fact that the transmission delay time between the station houses X and Z (between the station house X and the OADM) included in the route delay information is L9.

Advantageous Effects of Fifth Example Embodiment

According to the management device in the fifth example embodiment, a transmission route of a transmission path may be identified, even when communication with equipment disposed on the transmission path of an optical transmission system is not possible. This is because, on the basis of route delay information indicating a transmission delay time for each transmission route, and a measurement delay time of the transmission path collected from the optical transmitting/receiving device of the optical transmission system, the management device identifies a transmission route corresponding to the measurement delay time.

Moreover, according to the management device in the fifth example embodiment, even after communication with equipment disposed on the transmission path of the optical transmission system becomes impossible, route delay information of a transmission route in the optical transmission system may be registered. This is because, route delay information based on a designed transmission route and transmission delay time of the transmission path of the optical transmission system is registered.

Sixth Example Embodiment

The first example embodiment is an example in which a round-trip delay time of a transmission path between optical transmitting/receiving devices is a transmission delay time. A sixth example embodiment is an example in which a one-way delay time of a transmission path between optical transmitting/receiving devices is a transmission delay time.

Configurations similar to those of the optical transmission system and the management device according to the first example embodiment may be used for parts of configurations of an optical transmission system and a management device according to the sixth example embodiment. Therefore, in a description of the sixth example embodiment, differences between the sixth example embodiment and the first example embodiment are mainly described, similar reference signs are given to configurations similar to those in the first example embodiment, and a detailed description thereof is thus omitted.

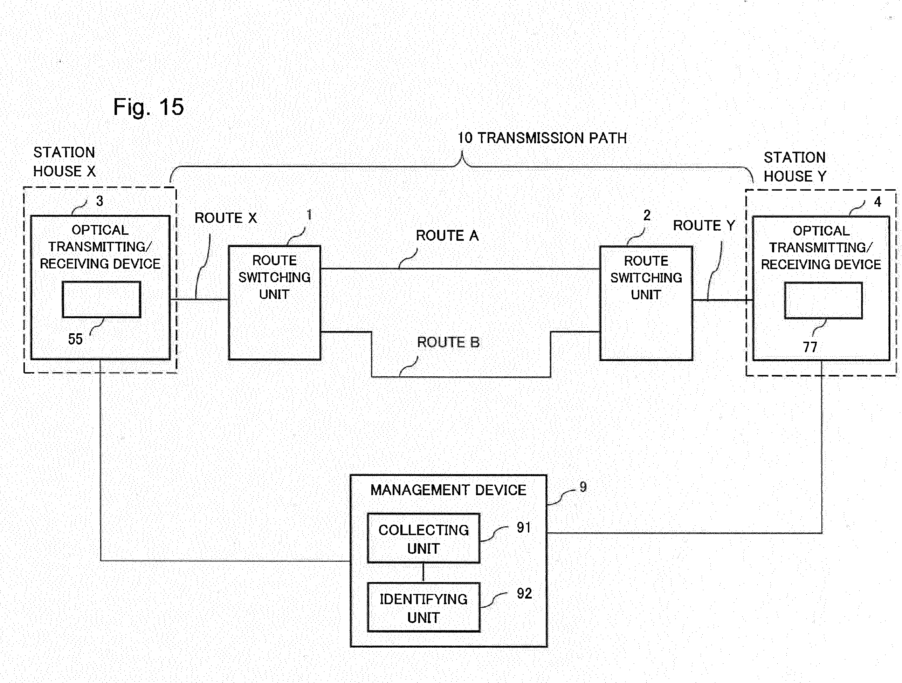

Configurations of the optical transmission system and the management device according to the sixth example embodiment are described with reference to the drawings. Fig. 15 is a block diagram illustrating the configurations of the management device and the optical transmission system according to the sixth example embodiment. As illustrated in Fig. 15, the optical transmission system according to the sixth example embodiment includes an optical transmitting/receiving device 3 disposed in a station house X and provided with an optical transponder 55, an optical transmitting/receiving device 4 disposed in a station house Y and provided with an optical transponder 77, and a transmission path 10 connecting the optical transmitting/receiving device 3 and the optical transmitting/receiving device 4. Route redundant sections of a route A and a route B having different route lengths are configured by a route switching unit 1 and a route switching unit 2 disposed on the transmission path 10.

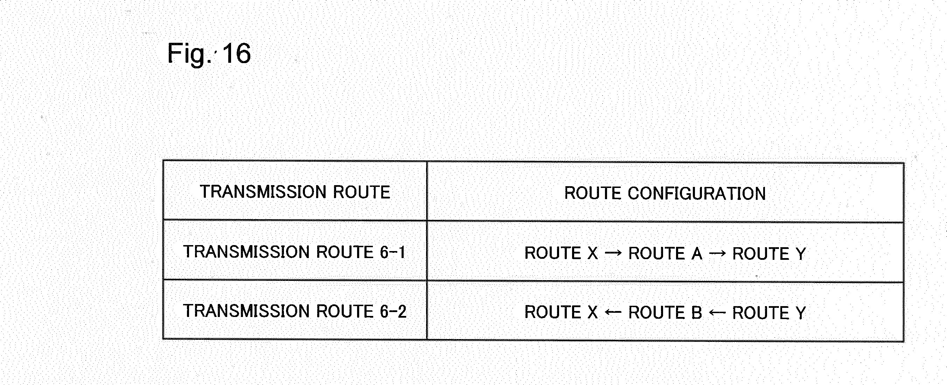

Fig. 16 is a table diagram illustrating a route configuration between optical transmitting/receiving devices in the sixth example embodiment. As illustrated in Fig. 16, routes from the optical transmitting/receiving device 3 to the optical transmitting/receiving device 4 are a transmission route 6-1 constituted by a route X => a route A => a route Y, and a transmission route 6-2 constituted by the route X => a route B => the route Y.

The optical transponder 55 and the optical transponder 77 according to the sixth example embodiment may be configured by use of the function of the optical transponder 5 according to the first example embodiment. For a simple description, description is made by using an example in which the configuration of the optical transponder 5 according to the first example embodiment is applied to the optical transponder 55 on a transmitting side and the optical transponder 77 on a receiving side, respectively.

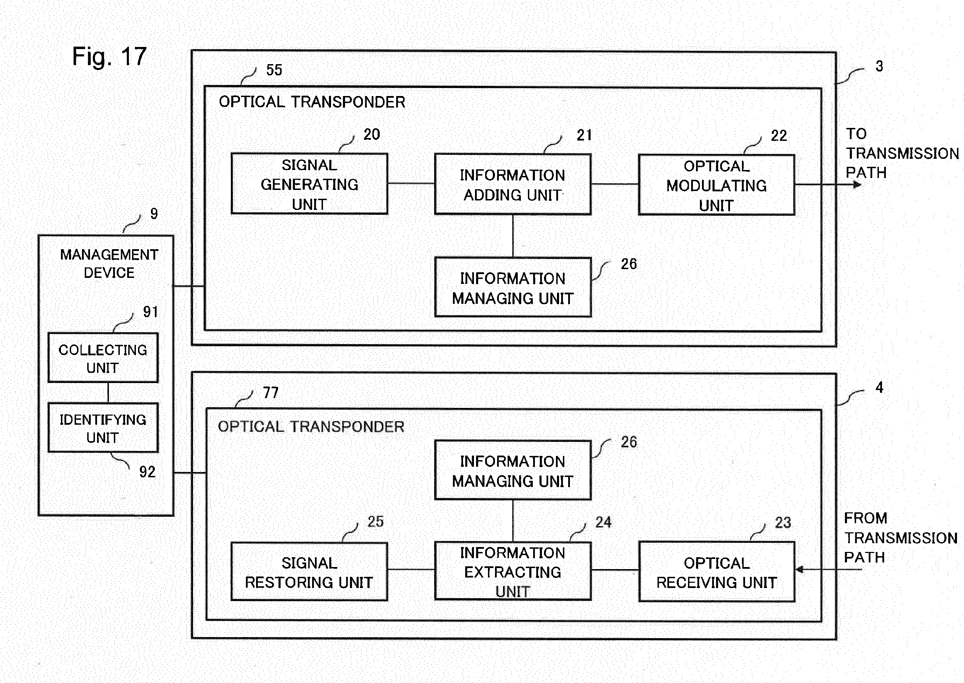

Fig. 17 is a block diagram illustrating a configuration of the optical transponder of the optical transmitting/receiving device according to the sixth example embodiment. The optical transponder 55 of the optical transmitting/receiving device 3 illustrated in Fig. 17 includes a signal generating unit 20, an information adding unit 21, an optical modulating unit 22, and an information managing unit 26. Moreover, the optical transponder 77 of the optical transmitting/receiving device 4 includes an optical receiving unit 23, an information extracting unit 24, a signal restoring unit 25, and an information managing unit 26. A management device 9 is connected to the optical transponders 55 and 77, respectively.

The signal generating unit 20 of the optical transponder 55 on the transmitting side generates a main signal, and the information adding unit 21 adds measurement information generated in the information managing unit 26 to the main signal. The optical modulating unit 22 converts the main signal to which the measurement information is added into an optical signal, and then transmits the optical signal to the transmission path 10.

The optical receiving unit 23 of the optical transponder 77 on the receiving side receives an optical signal transmitted from the optical transmitting/receiving device 3, and the signal restoring unit 25 restores an optical signal after the reception. Further, the information extracting unit 24 extracts measurement information from the main signal after the reception, and sends the measurement information to the information managing unit 26 together with an extraction time at which the measurement information is extracted. The information managing unit 26 on the receiving side acquires a transmission delay time on the basis of a time in the measurement information and the extraction time. For example, when the measurement information is time information, the transmission delay time may be measured by use of a time included in the time information, and the extraction time at which the information managing unit 26 has extracted the measurement information. The information managing unit 26 sends the measured transmission delay time to the management device 9.

Note that, when there is a time difference between places where the optical transmitting/receiving device 3 and the optical transmitting/receiving device 4 are disposed, the optical transmitting/receiving device 4 acquires information about the time difference between the optical transmitting/receiving device 3 and the optical transmitting/receiving device 4 from the management device 9. By using the information about the time difference between the optical transmitting/receiving device 3 and the optical transmitting/receiving device 4, the information managing unit 26 of the optical transponder 77 corrects the time in the measurement information to the time of the place where the optical transmitting/receiving device 4 is disposed. The information managing unit 26 measures a delay time of an outward way of the transmission path on the basis of the corrected time and the extraction time.

Next, a configuration of the management device according to the sixth example embodiment is described. As illustrated in Fig. 17, the management device 9 includes a collecting unit 91 and an identifying unit 92. It is assumed that the management device 9 is able to communicate with the optical transponder 77 of the optical transmitting/receiving device 4. The collecting unit 91 of the management device 9 communicates with the optical transponder 77, and collects a measurement delay time being a delay time acquired by the information managing unit 26 of the optical transponder 77. The collecting unit 91 stores information associated with the collected measurement delay time in a storage unit (not illustrated).

Note that, when the management device 9 is able to communicate with the optical transmitting/receiving device 4, the optical transmitting/receiving device 4 may be configured to acquire a measurement delay time from an optical transponder 7, and the management device 9 may be configured to collect the measurement delay time from the optical transmitting/receiving device 4.

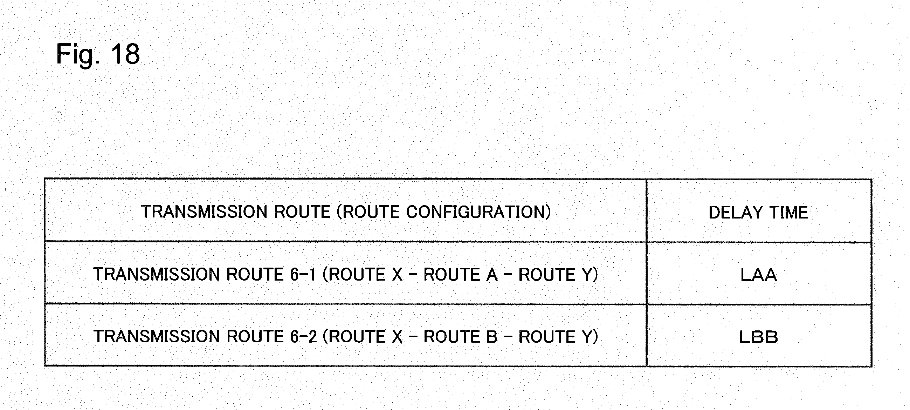

Fig. 18 is a table diagram illustrating a relation between a transmission delay time measured by the optical transponder and a route according to the sixth example embodiment. A route name, a route configuration, and a transmission delay time are illustrated in the table diagram of Fig. 18. The transmission delay time illustrated in Fig. 18 is measured on a one-way route of the transmission path from the optical transmitting/receiving device 3 to the optical transmitting/receiving device 4.

The transmission delay time measured by the information managing unit 26 of the optical transponder 7 changes depending on a route length of the transmission path. As illustrated in Fig. 15, when a route length of the route A is shorter than a route length of the route B, a relation between transmission delay times in the transmission route 6-1 and the transmission route 6-2 is LAA (microseconds to milliseconds) < LBB (microseconds to milliseconds).

Identification of Transmission Route

Next, identification of a transmission route of the optical transmission system by the management device 9 according to the sixth example embodiment is described. In the first example embodiment, a transmission route is identified in a situation where the management device 9 may not communicate with the route switching unit 1 and the route switching unit 2 disposed on the transmission path 10 of the optical transmission system. Note that the management device 9 has already acquired a transmission delay time for each transmission route illustrated in Fig. 18 and registered the transmission delay time in the storage unit (not illustrated) before becoming unable to communicate with the route switching units 1 and 2.

After the management device 9 has become unable to communicate with the route switching units 1 and 2, the collecting unit 91 of the management device 9 instructs the optical transmitting/receiving device 3 and the optical transmitting/receiving device 4 to acquire a transmission delay time by an outward way (one-way) of the transmission path. When there is a time difference between places where the optical transmitting/receiving device 3 and the optical transmitting/receiving device 4 are disposed, the collecting unit 91 of the management device 9 sends time difference information between the optical transmitting/receiving device 3 and the optical transmitting/receiving device 4 to the optical transmitting/receiving device 4.

In response to the instruction from the management device 9, the optical transponder 55 of the optical transmitting/receiving device 3 transmits, to the transmission path 10, an optical signal to which measurement information is added with the optical transmitting/receiving device 4 as a destination. The optical transponder 77 of the optical transmitting/receiving device 4 receives the optical signal from the transmission path 10, and extracts the measurement information. The optical transponder 77 acquires a transmission delay time from a time included in the measurement information, and an extraction time of the measurement information in the optical transponder 77.

The collecting unit 91 of the management device 9 collects the measurement delay time being a transmission delay time measured by the optical transponder 7, and the identifying unit 92 identifies a transmission route corresponding to the measurement delay time on the basis of the collected measurement delay time, and the route delay information registered in the storage unit (not illustrated) of the management device 9.

For example, when the collected measurement delay time is LAA (microseconds to milliseconds), the identifying unit 92 identifies the transmission route between the optical transmitting/receiving devices 3 and 4 as the transmission route 6-1, on the basis of the transmission delay time for each transmission route registered in the storage unit (not illustrated). Note that the management device 9 is able to communicate with the route switching units 1 and 2 in the above-described example of the identification of a transmission route, but the disclosed subject matter is not limited thereto. It goes without saying that the management device 9 is also applicable even when the management device 9 is originally unable to communicate with the route switching units 1 and 2.

In this way, according to the sixth example embodiment, the management device 9 may identify a transmission route of the transmission path of the optical transmission system in the case of a round-trip delay time, even when a delay time of a transmission route of the optical transmission system is a one-way delay time.

Next, an example using the configuration according to the sixth example embodiment is indicated as a method of recognizing a route state in a transmission path. Note that the recognition method described below is an exemplification and not limited to this example.

Recognition of Route State

Recognition of a route state in the transmission path of the optical transmission system is described by use of the configuration according to the sixth example embodiment. It is assumed that, in the optical transmission system illustrated in Fig. 15, the route switching unit 1 disposed on the transmission path 10 has a function of autonomously switching between the route A and the route B whether or not the route switching unit 1 is instructed by the management device 9. Moreover, it is assumed that the management device 9 has already registered route delay information illustrated in Fig. 18 in the storage unit (not illustrated).

The collecting unit 91 of the management device 9 instructs the optical transponders 55 and 77 of the optical transmitting/receiving devices 3 and 4 of the optical transmission system to acquire a plurality of transmission delay times. For example, the optical transponders 55 and 77 acquire six transmission delay times by measuring transmission delay times at intervals of ten minutes. Next, the collecting unit 91 collects six measurement delay times from the optical transponder 77.

Then, the identifying unit 92 identifies a corresponding transmission route for each of the collected six measurement delay times, by use of the route delay information illustrated in Fig. 18. When there are not any transmission routes corresponding to the plurality of measurement delay times, the identifying unit 92 recognizes that this transmission route is interrupted.

In this way, the collecting unit 91 of the management device 9 according to the sixth example embodiment collects a plurality of measurement delay times, and the identifying unit 92 identifies transmission routes corresponding to the plurality of collected measurement delay times, thereby making it possible to recognize a route state in the transmission path.

Moreover, finding of a route state of the management device 9 has been described by use of the configuration according to the sixth example embodiment, but may also be applied to the transmission path of the optical transmission system according to the first to fifth example embodiments.

Others

The first to sixth example embodiments may be an aspect in which these example embodiments are combined. Although the examples of the transmission paths 10 and 11 described in the first to sixth example embodiments have fibers and optical repeaters, the disclosed subject matter is not limited thereto. For example, the disclosed subject matter is also applicable to a transmission path in which no optical repeater is disposed on the transmission path 10.

(Hardware Configuration)

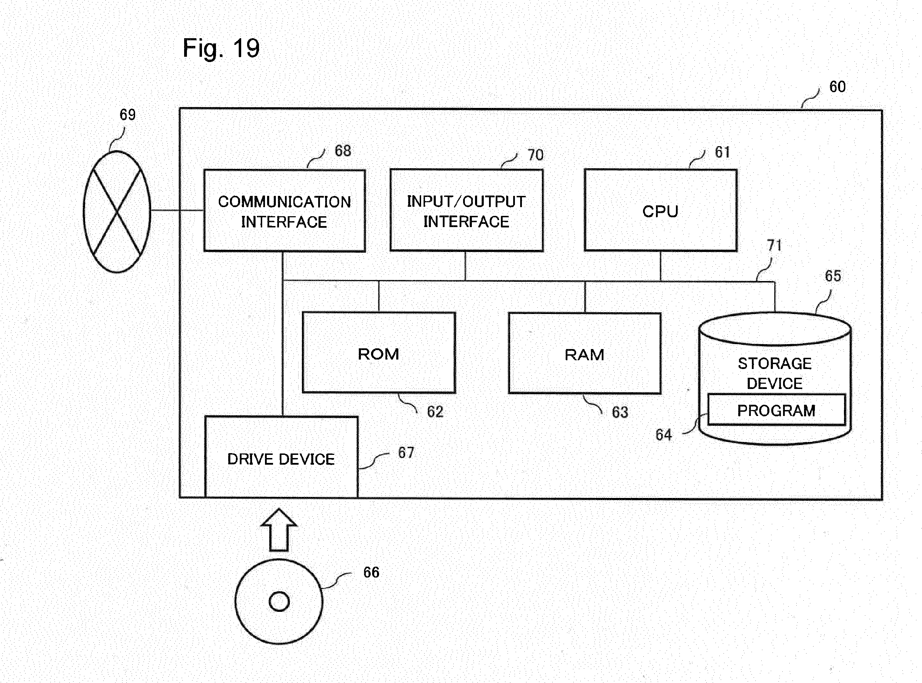

Fig. 19 is a diagram illustrating a hardware configuration in which the management devices 9 in the first to sixth example embodiments are realized by a computer device.

In the first to sixth example embodiments, each component of the management device indicates a block in a function unit. Some or all of the respective components of the management device are realized by, for example, a given combination of an information processing device 60 and a program as illustrated in Fig. 19. The information processing device 60 includes the following configuration by way of example:

a central processing unit (CPU) 61,
a read only memory (ROM) 62,
a random access memory (RAM) 63,
a program 64 loaded onto the RAM 63,
a storage device 65 which stores the program 64,
a drive device 67 which reads from and writes into a recording medium 66,
a communication interface 68 which is connected to a communication network 69,
an input/output interface 70 which inputs and outputs data, and a bus 71 which connects the respective components.

The respective components of the management device 9 are realized when the CPU 61 acquires and executes the program 64 which realizes the functions of these components. The program 64 which realizes the functions of the collecting unit 91 and the identifying unit 92 of the management device 9 is, for example, previously stored in the storage device 65 or the RAM 63, and read by the CPU 61 when needed. Note that the program 64 may be supplied to the CPU 61 via the communication network 69, or may be previously stored in the recording medium 66, and read and supplied to the CPU 61 by the drive device 67.

There are various modification examples of the method of realizing the management device 9. For example, the management device 9 may be realized by a given combination of the information processing device 60 and a program.

Moreover, the collecting unit 91 and the identifying unit 92 of the management device 9 are realized by other general-purpose or special circuits, processors, or the like, or by a combination of these. These may be configured by a single chip, or a plurality of chips connected via a bus. Alternatively, a programmable logic device such as a field-programmable gate array (FPGA) may be used instead of the information processing device 60.

Furthermore, the collecting unit 91 and the identifying unit 92 of the management device 9 may be realized by a combination of the above-described circuit or the like and a program.

In addition, when the functions of the collecting unit 91 and the identifying unit 92 of the management device 9 are realized by a plurality of information processing devices, circuits, or the like, the plurality of information processing devices, circuits, or the like may be arranged in a centralized or distributed manner. For example, the information processing device, the circuit, or the like may be realized in a form such as a client and server system or a cloud computing system in which each is connected via the communication network.

While the invention of the present application has been described above with reference to the example embodiments, the invention of the present application is not limited to the example embodiments described above. Various modifications that may be appreciated by a person skilled in the art may be made to the configurations and details of the invention of the present application within the scope of the invention of the present application.

Moreover, a direction of an arrow in the drawing indicates one example, and does not limit a direction of a signal between blocks.

This application is based upon and claims the benefit of priority from Japanese patent application No. 2016-063618, filed on March 28,.

[Reference Signs List]

1, 2 Route switching unit
3, 4, 33, 44, 88 Optical transmitting/receiving device
5, 7, 55, 77 Optical transponder
6, 8 Wavelength multiplexing/demultiplexing unit
9 Management device
10, 11 Transmission path
12, 13, 14, 15 Route switching unit
20 Signal generating unit

21 Information adding unit
22 Optical modulating unit
23 Optical receiving unit
24 Information extracting unit
25 Signal restoring unit
26 Information managing unit
31, 32, 53, 54 Function adding unit
50 Function switching device
56 OADM
60 Information processing device
61 CPU
63 RAM
64 Program
65 Storage device
66 Recording medium
67 Drive device
68 Communication interface
69 Communication network
70 Input/output interface
71 Bus
91 Collecting unit
92 Identifying unit

**Claims**

1. A system comprising:

   an optical transmission system including a first transmitting/receiving device (3; 33) and a second optical transmitting/receiving device (4; 44) and being provided with a transmission path (10) in which each transmission route between the first and second optical transmitting/receiving devices has a different transmission path length; and
   a management device (9) for the optical transmission system,
   wherein the first transmitting/receiving device (3; 33) is configured to measure, as a measurement delay time, a transmission delay time of the transmission path, and
   the management device (9) comprising:

   collecting means (91) for pre-registering route delay information indicating a transmission delay time for each of the transmission routes, and communicating with the first transmitting/receiving device (3; 33) and collecting the measurement delay time from the first optical transmitting/receiving device (3; 33); and
   identifying means (92) for identifying the transmission route corresponding to the measurement delay time, based on the route delay information and the measurement delay time.

2. The system according to claim 1, wherein

   the first optical transmitting/receiving device (33) includes a plurality of optical transponders (5) having different wavelength channels, and
   the management device (9) collects the measurement delay time measured by at least one of the optical transponders (5).

3. The system according to claim 1 or 2, wherein
   the collecting means (91) instructs the first optical transmitting/receiving device (3; 33) to measure a transmission delay time of the transmission path.

4. The system according to any one of claims 1 to 3, wherein
   a transmission delay time of the route delay information is a transmission delay time for each of the transmission routes being measured before start of operation of the optical transmission system or during the operation of optical transmission system.

**5.** The system according to any one of claims 1 to 3, wherein
a transmission delay time of the route delay information is a designed transmission delay time in a transmission path of the optical transmission system.

**6.** The system according to claim 5, wherein

the optical transmission system includes a plurality of route switching means (1, 2) on the transmission path,
a transmission route of the transmission path is configured by a combination of individual routes between the first optical transmitting/receiving device, the second optical transmitting/receiving device, and the plurality of route switching means,
the route delay information includes the transmission route, a route configuration of the transmission route, and a total delay time for each of the transmission paths, and
the total delay time is a total of designed transmission delay times of the individual routes constituting the transmission route.

**7.** The system according to any one of claims 1 to 6, wherein
the measurement delay time is a round-trip delay time between the first and second optical transmitting/receiving devices.

**8.** The system according to any one of claims 1 to 7, wherein the optical transmission system includes function adding means (31, 32; 53, 54) on each of the transmission routes.

**9.** An identification method for a transmission route in an optical transmission system provided with a transmission path in which each transmission route between a first transmitting/receiving device (3; 33) and a second optical transmitting/receiving device (4; 44) has a different transmission path length, the identification method comprising:

pre-registering route delay information indicating a transmission delay time for each of the transmission routes,
the first optical transmitting/receiving device (3; 33) measuring, as a measurement delay time, a transmission delay time of the transmission path, and
identifying a transmission route associated with the measurement delay time, based on the route delay information and the measurement delay time.

**10.** A computer program comprising instructions to cause the system according to claim 1 to execute the steps of the method according to claim 9.

**11.** A management device for an optical transmission system including a first transmitting/receiving device (3; 33) and a second optical transmitting/receiving device (4; 44) and being provided with a transmission path (10) in which each transmission route between the first and second optical transmitting/receiving devices has a different transmission path length, the management device (9) comprising:

collecting means (91) for pre-registering route delay information indicating a transmission delay time for each of the transmission routes, and collecting a measurement delay time being a transmission delay time of the transmission path being measured by the first optical transmitting/receiving device (3; 33); and
identifying means (92) for identifying the transmission route corresponding to the measurement delay time, based on the route delay information and the measurement delay time.

**Patentansprüche**

**1.** System, umfassend:

ein optisches Übertragungssystem, das eine erste Sende-/Empfangsvorrichtung (3; 33) und eine zweite optische Sende-/Empfangsvorrichtung (4; 44) enthält und mit einem Übertragungspfad (10) versehen ist, in welchem jeder Übertragungsweg zwischen der ersten und der zweiten optischen Sende-/Empfangsvorrichtung eine unterschiedliche Übertragungspfadlänge hat; und
eine Managementvorrichtung (9) für das optische Übertragungssystem,
wobei die erste Sende-/Empfangsvorrichtung (3; 33) konfiguriert ist, um eine Übertragungsverzögerungszeit des Übertragungspfads als Messverzögerungszeit zu messen; und

wobei die Managementvorrichtung (9) folgendes umfasst:

eine Sammeleinrichtung (91) zum Vorregistrieren von Wegverzögerungsinformation, die eine Übertragungsverzögerungszeit für jeden der Übertragungswege anzeigt, und zum Kommunizieren mit der ersten Sende-/Empfangsvorrichtung (3; 33) und Sammeln der Messverzögerungszeit von der ersten optischen Sende-/Empfangsvorrichtung (3; 33); und
eine Identifizierungseinrichtung (92) zum Identifizieren des Übertragungswegs entsprechend der Messverzögerungszeit basierend auf der Wegverzögerungsinformation und der Messverzögerungszeit.

2. System nach Anspruch 1, wobei

die erste optische Sende-/Empfangsvorrichtung (33) eine Vielzahl von optischen Transpondern (5) enthält, die Kanäle unterschiedlicher Wellenlänge haben, und
die Managementvorrichtung (9) die durch wenigstens einen der optischen Transponder (5) gemessene Messverzögerungszeit sammelt.

3. System nach Anspruch 1 oder 2, wobei
die Sammeleinrichtung (91) die erste optische Sende-/Empfangsvorrichtung (3; 33) anweist, eine Übertragungsverzögerungszeit des Übertragungspfads zu messen.

4. System nach einem der Ansprüche 1 bis 3, wobei
eine Übertragungsverzögerungszeit der Wegverzögerungsinformation eine Übertragungsverzögerungszeit für jeden der Übertragungswege ist, die vor Beginn eines Betriebs des optischen Übertragungssystems oder während des Betriebs eines optischen Übertragungssystems gemessen werden.

5. System nach einem der Ansprüche 1 bis 3, wobei
eine Übertragungsverzögerungszeit der Wegverzögerungsinformation eine Übertragungsverzögerungszeit der Konzeption in einem Übertragungspfad des optischen Übertragungssystems ist.

6. System nach Anspruch 5, wobei

das optische Übertragungssystem eine Vielzahl von Wegumschalteinrichtungen (1, 2) auf dem Übertragungspfad enthält,
ein Übertragungsweg des Übertragungspfads durch eine Kombination von individuellen Wegen zwischen der ersten optischen Sende-/Empfangsvorrichtung, der zweiten optischen Sende-/Empfangsvorrichtung und der Vielzahl von Wegumschalteinrichtungen konfiguriert ist,
die Wegverzögerungsinformation den Übertragungsweg, eine Wegkonfiguration des Übertragungswegs und eine gesamte Verzögerungszeit für jeden der Übertragungspfade enthält, und
die gesamte Verzögerungszeit eine Gesamtheit von bestimmten Übertragungsverzögerungszeiten der den Übertagungsweg bildenden individuellen Wege ist.

7. System nach einem der Ansprüche 1 bis 6, wobei
die Messverzögerungszeit eine Verzögerungszeit hin und zurück zwischen der ersten und der zweiten optischen Sende-/Empfangsvorrichtung ist.

8. System nach einem der Ansprüche 1 bis 7, wobei das optische Übertragungssystem eine Funktionshinzufügungseinrichtung (31, 32; 53, 54) auf jedem der Übertragungswege enthält.

9. Identifizierungsverfahren für einen Übertagungsweg in einem optischen Übertragungssystem, das mit einem Übertragungspfad versehen ist, in welchem jeder Übertragungsweg zwischen einer ersten Sende-/Empfangsvorrichtung (3; 33) und einer zweiten optischen Sende-/Empfangsvorrichtung (4; 44) eine unterschiedliche Übertragungspfadlänge hat, wobei das Identifizierungsverfahren folgendes umfasst:

Vorregistrieren von Wegverzögerungsinformation, die eine Übertragungsverzögerungszeit für jeden der Übertragungswege anzeigt,
wobei die erste optische Sende-/Empfangsvorrichtung (3; 33) eine Übertragungsverzögerungszeit des Übertragungspfads als Messverzögerungszeit misst, und
Identifizieren eines mit der Messverzögerungszeit assoziierten Übertragungswegs basierend auf der Wegverzögerungsinformation und der Messverzögerungszeit.

10. Computerprogramm, das Anweisungen umfasst, um zu veranlassen, dass das System nach Anspruch 1 die Schritte des Verfahrens gemäß Anspruch 9 ausführt.

11. Managementvorrichtung für ein optisches Übertragungssystem, das eine erste Sende-/Empfangsvorrichtung (3; 33) und eine zweite optische Sende-/Empfangsvorrichtung (4; 44) enthält und mit einem Übertragungspfad (10) versehen ist, in welchem jeder Übertragungsweg zwischen der ersten und der zweiten optischen Sende-/Empfangsvorrichtung eine unterschiedliche Übertragungspfadlänge hat, wobei die Managementvorrichtung (9) folgendes umfasst:

eine Sammeleinrichtung (91) zum Vorregistrieren von Wegverzögerungsinformation, die eine Übertragungsverzögerungszeit für jeden der Übertragungswege anzeigt, und zum Sammeln einer Messverzögerungszeit, die eine Übertragungsverzögerungszeit des Übertragungspfads ist, die durch die erste optische Sende-/Empfangsvorrichtung (3; 33) gemessen wird; und
eine Identifizierungseinrichtung (92) zum Identifizieren des Übertragungswegs entsprechend der Messverzögerungszeit basierend auf der Wegverzögerungsinformation und der Messverzögerungszeit.

**Revendications**

1. Système comprenant :

un système de transmission optique comprenant un premier dispositif d'émission/réception (3 ; 33) et un deuxième dispositif d'émission/réception optique (4; 44) et étant pourvu d'un trajet de transmission (10) dans lequel chaque route de transmission entre les premier et deuxième dispositifs d'émission/réception optiques a une longueur de trajet de transmission différente ; et
un dispositif de gestion (9) pour le système de transmission optique,
dans lequel le premier dispositif d'émission/réception (3 ; 33) est configuré pour mesurer, en tant que temps de retard de mesure, un temps de retard de transmission du trajet de transmission, et
le dispositif de gestion (9) comprenant :

des moyens de collecte (91) pour pré-enregistrer des informations de retard de route indiquant un temps de retard de transmission pour chacune des routes de transmission, et communiquer avec le premier dispositif d'émission/réception (3 ; 33) et collecter le temps de retard de mesure à partir du premier dispositif d'émission/réception optique (3 ; 33) ; et
des moyens d'identification (92) pour identifier la route de transmission correspondant au temps de retard de mesure, sur la base des informations de retard de route et du temps de retard de mesure.

2. Système selon la revendication 1, dans lequel

le premier dispositif d'émission/réception optique (33) comprend une pluralité de transpondeurs optiques (5) ayant des canaux de longueur d'onde différents, et
le dispositif de gestion (9) collecte le temps de retard de mesure mesuré par au moins l'un des transpondeurs optiques (5).

3. Système selon la revendication 1 ou 2, dans lequel
les moyens de collecte (91) donnent pour instruction au premier dispositif d'émission/réception optique (3 ; 33) de mesurer un temps de retard de transmission du trajet de transmission.

4. Système selon l'une quelconque des revendications 1 à 3, dans lequel
un temps de retard de transmission des informations de retard de route est un temps de retard de transmission pour chacune des routes de transmission qui est mesuré avant le début du fonctionnement du système de transmission optique ou pendant le fonctionnement du système de transmission optique.

5. Système selon l'une quelconque des revendications 1 à 3, dans lequel
un temps de retard de transmission des informations de retard de route est un temps de retard de transmission de la conception dans un trajet de transmission du système de transmission optique.

**6.** Système selon la revendication 5, dans lequel

le système de transmission optique comprend une pluralité de moyens de commutation de route (1, 2) sur le trajet de transmission,
une route de transmission du trajet de transmission est configurée par une combinaison de routes individuelles entre le premier dispositif d'émission/réception optique, le deuxième dispositif d'émission/réception optique, et la pluralité de moyens de commutation de route,
les informations de retard de route comprennent la route de transmission, une configuration de route de la route de transmission, et un temps de retard total pour chacun des trajets de transmission, et
le temps de retard total est un total de temps de retard de transmission conçus des routes individuelles constituant la route de transmission.

**7.** Système selon l'une quelconque des revendications 1 à 6, dans lequel
le temps de retard de mesure est un temps de retard aller-retour entre les premier et deuxième dispositifs d'émission/réception optiques.

**8.** Système selon l'une quelconque des revendications 1 à 7, dans lequel le système de transmission optique comprend des moyens d'ajout de fonction (31, 32 ; 53, 54) sur chacune des routes de transmission.

**9.** Procédé d'identification pour une route de transmission dans un système de transmission optique pourvu d'un trajet de transmission dans lequel chaque route de transmission entre un premier dispositif d'émission/réception (3 ; 33) et un deuxième dispositif d'émission/réception optique (4; 44) a une longueur de trajet de transmission différente, le procédé d'identification comprenant :

le pré-enregistrement d'informations de retard de route indiquant un temps de retard de transmission pour chacune des routes de transmission,
la mesure par le premier dispositif d'émission/réception optique (3 ; 33), en tant que temps de retard de mesure, d'un temps de retard de transmission du trajet de transmission, et
l'identification d'une route de transmission associée au temps de retard de mesure, sur la base des informations de retard de route et du temps de retard de mesure.

**10.** Programme informatique comprenant des instructions pour amener le système selon la revendication 1 à exécuter les étapes du procédé selon la revendication 9.

**11.** Dispositif de gestion pour un système de transmission optique comprenant un premier dispositif d'émission/réception (3 ; 33) et un deuxième dispositif d'émission/réception optique (4; 44) et étant pourvu d'un trajet de transmission (10) dans lequel chaque route de transmission entre les premier et deuxième dispositifs d'émission/réception optiques a une longueur de trajet de transmission différente, le dispositif de gestion (9) comprenant :

des moyens de collecte (91) pour pré-enregistrer des informations de retard de route indiquant un temps de retard de transmission pour chacune des routes de transmission, et collecter un temps de retard de mesure qui est un temps de retard de transmission du trajet de transmission qui est mesuré par le premier dispositif d'émission/réception optique (3 ; 33) ; et
des moyens d'identification (92) pour identifier la route de transmission correspondant au temps de retard de mesure, sur la base des informations de retard de route et du temps de retard de mesure.

## Fig. 1

10 TRANSMISSION PATH

STATION HOUSE X

STATION HOUSE Y

3

OPTICAL TRANSMITTING/ RECEIVING DEVICE

5

ROUTE X

1

ROUTE SWITCHING UNIT

ROUTE A

ROUTE B

2

ROUTE SWITCHING UNIT

ROUTE Y

4

OPTICAL TRANSMITTING/ RECEIVING DEVICE

7

MANAGEMENT DEVICE

9

COLLECTING UNIT

91

IDENTIFYING UNIT

92

EP 3 439 202 B1

Fig. 2

| TRANSMISSION ROUTE | ROUTE CONFIGURATION |
|---|---|
| TRANSMISSION ROUTE 1-1 | ROUTE X – ROUTE A – ROUTE Y |
| TRANSMISSION ROUTE 1-2 | ROUTE X – ROUTE B – ROUTE Y |

EP 3 439 202 B1

Fig. 3

OPTICAL TRANSPONDER    5

MANAGE-
MENT
DEVICE    9

SIGNAL
GENERATING UNIT    20

INFORMATION
ADDING UNIT    21

OPTICAL
MODULATING UNIT    22

INFORMATION
MANAGING UNIT    26

SIGNAL
RESTORING UNIT    25

INFORMATION
EXTRACTING UNIT    24

OPTICAL
RECEIVING UNIT    23

EP 3 439 202 B1

EP 3 439 202 B1

Fig. 4

| TRANSMISSION ROUTE (ROUTE CONFIGURATION) | DELAY TIME |
|---|---|
| TRANSMISSION ROUTE 1-1 (ROUTE X – ROUTE A – ROUTE Y) | LA |
| TRANSMISSION ROUTE 1-2 (ROUTE X – ROUTE B – ROUTE Y) | LB |

Fig. 5

```
              ┌─────────────┐
              │    START    │
              └──────┬──────┘
                     │
                     ▼
┌──────────────────────────────────────────────────────┐  S11
│  REGISTER DELAY TIME CORRESPONDING TO TRANSMISSION     │
│  ROUTE OF TRANSMISSION PATH AS ROUTE DELAY INFORMATION │
└───────────────────────────┬──────────────────────────┘
                            │
                            ▼
┌──────────────────────────────────────────────────────┐  S12
│           COLLECT MEASUREMENT DELAY TIME               │
└───────────────────────────┬──────────────────────────┘
                            │
                            ▼
┌──────────────────────────────────────────────────────┐  S13
│  IDENTIFY TRANSMISSION ROUTE CORRESPONDING TO          │
│  MEASUREMENT DELAY TIME                                 │
└───────────────────────────┬──────────────────────────┘
                            │
                            ▼
              ┌─────────────┐
              │     END     │
              └─────────────┘
```

EP 3 439 202 B1

Fig. 6

STATION HOUSE X

OPTICAL TRANSMITTING/ RECEIVING DEVICE — 33

6

ROUTE X

ROUTE SWITCHING UNIT — 1

5

10 TRANSMISSION PATH

ROUTE A

ROUTE B

STATION HOUSE Y

OPTICAL TRANSMITTING/ RECEIVING DEVICE — 44

8

ROUTE Y

ROUTE SWITCHING UNIT — 2

7

MANAGEMENT DEVICE — 9

COLLECTING UNIT — 91

IDENTIFYING UNIT — 92

EP 3 439 202 B1

Fig. 7

EP 3 439 202 B1

Fig. 8

Fig. 9

EP 3 439 202 B1

Fig. 10

11 TRANSMISSION PATH

12

ROUTE E

14

ROUTE SWITCHING UNIT

ROUTE SWITCHING UNIT

STATION HOUSE X

STATION HOUSE Y

ROUTE G

3

ROUTE C

ROUTE I

4

OPTICAL TRANSMITTING/ RECEIVING DEVICE

ROUTE D

13

ROUTE J

OPTICAL TRANSMITTING/ RECEIVING DEVICE

ROUTE H

15

ROUTE SWITCHING UNIT

ROUTE SWITCHING UNIT

ROUTE F

9

MANAGEMENT DEVICE

EP 3 439 202 B1

## Fig. 11

| ROUTE | ROUTE C | ROUTE D | ROUTE E | ROUTE F | ROUTE G | ROUTE H | ROUTE I | ROUTE J |
|---|---|---|---|---|---|---|---|---|
| DELAY TIME | L1 | L2 | L3 | L4 | L5 | L6 | L7 | L8 |

EP 3 439 202 B1

Fig. 12

| TRANSMISSION ROUTE | ROUTE CONFIGURATION | TOTAL DELAY TIME |
|---|---|---|
| TRANSMISSION ROUTE 4-1 | ROUTE C – ROUTE E – ROUTE I<br>ROUTE C – ROUTE E – ROUTE I | L1+L3+L7 |
| TRANSMISSION ROUTE 4-2 | ROUTE C – ROUTE G – ROUTE J<br>ROUTE C – ROUTE G – ROUTE J | L1+L5+L8 |
| TRANSMISSION ROUTE 4-3 | ROUTE D – ROUTE F – ROUTE J<br>ROUTE D – ROUTE F – ROUTE J | L2+L4+L8 |
| TRANSMISSION ROUTE 4-4 | ROUTE D – ROUTE H – ROUTE I<br>ROUTE D – ROUTE H – ROUTE I | L2+L6+L7 |

Fig. 13

STATION HOUSE X

**33** OPTICAL TRANSMITTING/ RECEIVING DEVICE

ROUTE P

ROUTE Q

**56** OADM

ROUTE P

ROUTE Q

STATION HOUSE Y

**44** OPTICAL TRANSMITTING/ RECEIVING DEVICE

STATION HOUSE Z

**88** OPTICAL TRANSMITTING/ RECEIVING DEVICE

MANAGEMENT DEVICE **9**

COLLECTING UNIT **91**

IDENTIFYING UNIT **92**

EP 3 439 202 B1

## Fig. 14

| TRANSMISSION ROUTE | ROUTE OF STATION HOUSE X – OADM | ROUTE OF STATION HOUSE Y – OADM | TRANSMISSION DELAY TIME OF STATION HOUSE X – STATION HOUSE Y | TRANSMISSION DELAY TIME OF STATION HOUSE X – OADM |
|---|---|---|---|---|
| TRANSMISSION ROUTE 5-1 | ROUTE P | ROUTE P | L9+L9 | L9 |
| TRANSMISSION ROUTE 5-2 | ROUTE P | ROUTE Q | L9+L10 | L9 |
| TRANSMISSION ROUTE 5-3 | ROUTE Q | ROUTE P | L10+L9 | L10 |
| TRANSMISSION ROUTE 5-4 | ROUTE Q | ROUTE Q | L10+L10 | L10 |

## Fig. 15

STATION HOUSE X

10 TRANSMISSION PATH

STATION HOUSE Y

3

OPTICAL TRANSMITTING/ RECEIVING DEVICE

55

ROUTE X

1

ROUTE SWITCHING UNIT

ROUTE A

ROUTE B

2

ROUTE SWITCHING UNIT

ROUTE Y

4

OPTICAL TRANSMITTING/ RECEIVING DEVICE

77

MANAGEMENT DEVICE

9

COLLECTING UNIT

91

IDENTIFYING UNIT

92

EP 3 439 202 B1

Fig. 16

| TRANSMISSION ROUTE | ROUTE CONFIGURATION |
|---|---|
| TRANSMISSION ROUTE 6-1 | ROUTE X → ROUTE A → ROUTE Y |
| TRANSMISSION ROUTE 6-2 | ROUTE X ← ROUTE B ← ROUTE Y |

Fig. 17

Fig. 18

| TRANSMISSION ROUTE (ROUTE CONFIGURATION) | DELAY TIME |
|---|---|
| TRANSMISSION ROUTE 6-1 (ROUTE X - ROUTE A - ROUTE Y) | LAA |
| TRANSMISSION ROUTE 6-2 (ROUTE X - ROUTE B - ROUTE Y) | LBB |

Fig. 19

EP 3 439 202 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015103538 A1
- JP 2008072181 A
- JP 2005341022 A
- JP 2005269034 A
- JP 2016063618 A